# EUROPÄISCHE PATENTSCHRIFT

(11) **EP 2 885 309 B1**
(45) Veröffentlichungstag und Bekanntmachung des Hinweises auf die Patenterteilung: **15.03.2017**
(21) Anmeldenummer: 13750669.7
(22) Anmeldetag: 07.08.2013
(51) Int. Cl.: C07F 9/54

(54) **ISOMERISIERUNG OLEFINISCHER VERBINDUNGEN**
ISOMERIZATION OF OLEFINIC COMPOUNDS
ISOMÉRISATION DE COMPOSÉS OLÉFINIQUES

(30) Priorität: 17.08.2012 EP 12180779
(43) Veröffentlichungstag der Anmeldung: 24.06.2015
(73) Patentinhaber: BASF SE, 67056 Ludwigshafen am Rhein (DE)
(72) Erfinder: SCHÄFER, Bernd, 76889 Dierbach (DE); SIEGEL, Wolfgang, 67117 Limburgerhof (DE)
(74) Vertreter: BASF IP Association
(86) Internationale Anmeldenummer: PCT/EP2013/066580
(87) Internationale Veröffentlichungsnummer: WO 2014/026896

(56) Entgegenhaltungen:
- GERHARD ENGLERT ET AL: "Synthesis, Isolation, and Full Spectroscopic Characterization of Eleven (Z)-Isomers of (3R,3'R)-Zeaxanthin", HELVETICA CHIMICA ACTA, Bd. 74, Nr. 5, 7. August 1991 (1991-08-07) , Seiten 969-982, XP055079202, ISSN: 0018-019X, DOI: 10.1002/hlca.19910740507

## Beschreibung

Die vorliegende Erfindung betrifft ein Verfahren zur Herstellung eines olefinsich ungesättigten Phosphoniumsalzes 1 mit wenigstens zwei Doppelbindungen, wobei das Phosphoniumsalz 1 bezüglich einer Doppelbindung Z-konfiguriert und bezüglich der oder wenigstens einer weiteren Doppelbindung E-konfiguriert ist. Ferner umfasst die vorliegende Erfindung unterschiedlichste Verwendungen des nach dem erfindungsgemäßen Verfahren hergestellten Phosphoniumsalzes 1.

[(2Z,4E)-3-methyl-5-(2,6,6-trimethylcyclohexen-1-yl)penta-2,4-dienyl]-triphenyl-phosphoniumsalz 1 ist ein wertvoller Synthesebaustein zur Herstellung von 9Z-Carotinoiden und 9Z-Retinoiden. So ist 9Z-β-Carotin ein Intermediat bei der Biosynthese verschiedener Phytohormone mit unterschiedlicher Signalwirkung, die zukünftig nutzbringend im Pflanzenschutz einsetzbar sind. Ein prominentes Beispiel ist das Carlacton (Science 335 (2012) 1348). 9Z-Retinsäure ist eine physiologisch bedeutsame Verbindung (Nature 355 (1992) 359), die auch als Pharmawirkstoff zur Behandlung verschiedener Hauterkrankungen (WO-A1-99/09 969), wie Handekzeme und des Kaposi Sarkoms einsetzbar ist.

Die Gewinnung verschiedener Phosphoniumsalze 4, 5, 6 und 7 aus entsprechenden acetylenischen Phosphoniumsalzen 3 ist bereits in Helv. Chim. Acta, (1991), 74, 969 bis 982 beschrieben. Ferner entnimmt man dieser Schrift aus Beispiel 3 auf Seite 980, dass sich {(2Z,4E)-5-[(R)-4-Hydroxy-2,6,6-trimethylcyclohex-1-enyl]-3-methylpenta-2,4-dienyl}triphenylphosphonium Chlorid durch Erwärmen von {(2Z,4Z)-5-[(R)-4-Hydroxy-2,6,6-trimethylcyclohex-1-enyl]-3-methylpenta-2,4-dienyl}triphenylphosphonium Chlorid in einer methanolischen Palladiumacetatlösung erhalten lässt. Man setzt hierzu allerdings ein Phosphoniumsalz mit einem 2,6,6-Trimethylcyclohex-1-enyl-Ring ein, der in 4-Stellung eine OH-Gruppe trägt. Darüber hinaus weist diese Ausgangsverbindung in ihrer azyklischen Seitenkette eine 2Z,4Z-Konfiguration auf, sprich das entsprechende 2Z,4E-Phosphoniumsalz wird aus einer 2Z,4Z-Ausgangsverbindung erhalten. Schließlich ist der Einsatz von Palladiumacetat kostspielig und macht die Reaktion für den großtechnischen Maßstab unwirtschaftlich.

Eine technisch anwendbare Synthese zur Herstellung von 9Z-Retinsäure wurde erstmals 1994 beschrieben (EP-A1-0 659 739). Der in dieser Schrift offenbarte Prozess ist dadurch gekennzeichnet, dass man eine Mutterlauge eines C15-Triarylphosphoniumsalzgemisches verwendet, die das 2Z,4E-Isomere 1 des besagten Salzes in angereicherter Form enthält und diese mit β-Formylcrotonsäureester in einer Wittig-Reaktion umsetzt.

Neben dem 2Z,4E Isomeren 1 liegen jedoch in einer Mutterlauge und gleichsam in der angereicherten Mutterlauge noch weitere Isomere wie u.a. das 2E,4E Isomere (auch als allE-Isomeres oder all tans Isomeres bezeichnet), das 2Z,4Z-Isomere und das 2E,4Z-Isomere des C15-Triarylphosphoniumsalzes vor. Darüber hinaus bedient man sich zur 9Z-Retinsäuresynthese nur der Mutterlauge oder der angereicherten Mutterlauge, die beide qua definitionem nach oder bei einem Kristallisationsprozeß eines Isomerengemisches von C15-Triarylphosphoniumsalzen anfallen. Demnach steht das beim jeweiligen Kristallisationsprozeß als kristallisierter Feststoff erhaltene Isomer des C15-Triarylphosphoniumsalzes für eine weitere Umsetzung zur 9Z-Retinsäure ebenfalls nicht zur Verfügung.

In welchem Umfang bei der Phosphoniumsalzherstellung nicht gewünschte Isomere von C15-Triarylphosphoniumhydrogensulfat anfallen und keiner weiteren Verarbeitung zu 9Z-Retinsäure zugeführt werden können, macht Beispiel 1 der '739-Schrift deutlich.

Zunächst sind wie gesagt bereits Kristalle als Wertprodukt nicht mehr zugängig, da nur mit der Mutterlauge gearbeitet wird. Diese ergibt 91,8 g Öl, aus dem nach Abtrennung wiederum ausgefällter Kristalle 42,2 g eines angereicherten Öls erhalten werden, welches 28,03 g (65,8 Gew.-%) (2Z,4E)-3-methyl-5-(2,6,6-trimethylcyclohexen-1-yl)penta-2,4-dienyl]-triphenyl-phosphoniumsalz der Formel 1 und 8,01 g (19 Gew.-%) [(2E,4E)-3-methyl-5-(2,6,6-trimethyl-cyclohexen-1-yl)penta-2,4-dienyl]-triphenyl-phosphoniumsalz der allgemeinen Formel 2 enthält. Man erkennt, dass von ehemals 91,8 g aus Mutterlauge gewonnenen Öls lediglich 28,03 g 2Z,4E-Isomer erhalten werden, entsprechend einer Ausbeute von 30,5 Gew.-%. Mithin bleiben fast 70 Gew.-% Öl aus den vormals 91,8 g Öl, welches aus der Mutterlauge gewonnen wurde, ungenutzt zurück.

Dieser Verlust ist noch um ein Deutliches höher, bezieht man die Gewichtsmenge erhaltenen C15-Triaraylphosphoniumsalzes der Formel 1 nicht nur auf das aus der Mutterlauge gewonnene Öl, sondern betrachtet man die Gewichtssumme aus dem aus Mutterlauge gewonnenen Öl und den aus der Reaktionsmischung vor Aufarbeitung durch Kristallisation abgetrennten Kristallen.

Beispiel 2 der '739-Schrift zeigt ähnliche Ergebnisse bei Umsetzung eines entsprechenden C15-Triarylphosphoniumchlorides.

Ungeachtet dieser Ergebnisse bedient man sich auch in der WO-A1-2004/089887 ausschließlich einer Mutterlauge als Quelle für (2Z,4E)-3-methyl-5-(2,6,6-trimethylcyclohexen-1-yl)penta-2,4-dienyl]-triphenyl-phosphoniumsalze insbesondere Chloride (s. S. 2, Z. 16 bis S 3, Z. 9) und erzielt damit gleichermaßen geringe Ausbeuten. So ergibt sich aus Beispiel 1, dass aus 200 g eines aus einer Mutterlauge gewonnenen Öls lediglich 62,06 g entsprechend 31,0 Gew.-% bezogen auf die Menge eingesetzten Öls erhalten werden. Ergo bleiben auch hier fast 70 Gew.-% eines Öls aus den vormals 200 g eingesetzten Öls ungenutzt zurück. In gleicher Weise ist auch hier der Verlust noch um ein Deutliches größer, wenn man die Gewichtsmenge erhaltenen C15-Triaraylphosphoniumsalzes der Formel 1 nicht nur auf das aus der Mutterlauge gewonnene Öl, sondern auf die Gewichtssumme aus dem aus Mutterlauge gewonnenen Öl und den aus der Raktionsmischung vor Aufarbeitung durch Kristallisation abgetrennten Kristallen bezieht.

Selbst 14 Jahre nach Einreichung der '739-Schrift greift man immer noch auf die in den bereits genannten Schriften verwendete Mutterlauge als Quelle für das [(2Z,4E)-3-methyl-5-(2,6,6-trimethylcyclohexen-1-yl)penta-2,4-dienyl]-triphenyl-phosphoniumsalz 1 zurück. So liest man nämlich in Beispiel 1 der WO-A1-2008/037465, dass hierzu 300 g davon einzusetzen und einer Extraktion und Kristallisation zu unterwerfen sind. Schließlich erhält man 69 g des [(2Z,4E)-3-methyl-5-(2,6,6-trimethylcyclohexen-1-yl)penta-2,4-dienyl]-triphenyl-phosphoniumsalz 1 mit einer Reinheit von >97 %. Dies entspricht einer Ausbeute von 23 % bezogen auf die Menge an eingesetzter Mutterlauge und kann hinsichtlich Wirtschaftlichkeit der Reaktion nicht befriedigen. Legt man zur Berechnung der Ausbeute nicht nur die Menge an eingesetzter Mutterlauge sondern die Gewichtssumme aus Mutterlauge und vorab gewonnener Menge an Kristallen zugrunde, ist die Ausbeute auch hier noch um einiges schlechter.

Ausschließlich aus Mutterlaugen [(2Z,4E)-3-methyl-5-(2,6,6-trimethylcyclohexen-1-yl)penta-2,4-dienyl]-triphenyl-phosphoniumsalz 1 zu erhalten und zudem noch in derart geringen Ausbeuten, verteuert die Produktion von 9Z-Retinsäure, von 9Z-Retinoiden bzw. von Z- oder Di-Z-Carotinoiden merklich. Außerdem müssen Überreste nicht genutzter Mutterlauge oder Mutterlaugen verworfen werden.

Ein weiterer Schwachpunkt aller bisherigen Verfahren beruht darin, dass die Zusammensetzung der Mutterlaugen, die zum Einsatz kommen, schlecht charakterisiert ist und große Volumina bewegt werden müssen, um das in wenigen Prozent darin enthaltene (2Z,4E)-C15-Triarylphosphoniumsalz in geeigneter Form zu verwerten.

Mit dem bis jetzt existierenden Fachwissen wurde jedoch noch keine Lösung dafür gefunden, diese bereits viele Jahre währenden Schwierigkeiten zu überwinden.

Ausgehend von diesem Mangel liegt der Erfindung die Aufgabe zugrunde, die Nachteile des Standes der Technik zu beseitigen und ein Verfahren bereitzustellen, mit dem ein olefinisch ungesättigtes Phosphoniumsalz mit wenigstens zwei olefinischen Doppelbindungen in gegenüber dem Stand der Technik hohen Ausbeuten erhalten wird, wobei das Phosphoniumsalz bezüglich einer olefinischen Doppelbindung Z-konfiguriert und bezüglich wenigstens einer weiteren olefinischen Doppelbindung E-konfiguriert ist. Im Besonderen wird angestrebt, ein C15-Triarylphosphoniumsalz bereitzustellen, bei dem eine olefinische Doppelbindung Z-konfiguriert ist und wenigstens eine weitere olefinische Doppelbindung in einer E-Konformation vorliegt, insbesondere ein solches mit der Strukturformel oder allgemeinen Formel 1. Das Verfahren soll einfach und schnell sein in seiner Durchführung und ohne Schwierigkeiten auf großtechnische Anlagen übertragbar, dabei jedoch kostengünstig, energiesparend und wenig, nach Möglichkeit gar keine Nebenprodukte hervorbringen. Etwaig auftretende Nebenprodukte sollen solcher Natur sein, dass deren Entsorgung oder Deponierung vermeidbar ist. Eine weitere Aufgabe nach der Erfindung ist es, geeignete Verwendungen für die nach dem erfindungsgemäßen Verfahren hergestellten Verbindungen aufzuzeigen.

In eindrucksvoll einfacher Weise löst diese Aufgabe ein Verfahren zur Herstellung von [(2Z,4E)-3-methyl-5-(2,6,6-trimethylcyclohexen-1-yl)penta-2,4-dienyl]-triphenyl-phosphoniumsalz der allgemeinen Formel 1 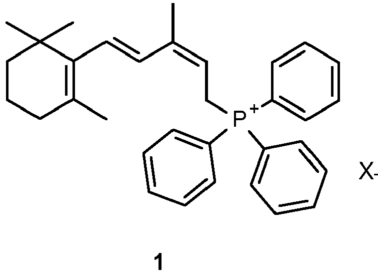 durch Isomerisierung von [(2E,4E)-3-methyl-5-(2,6,6-trimethylcyclohexen-1-yl)penta-2,4-dienyl]triphenyl-phosphoniumsalz der allgemeinen Formel 2, 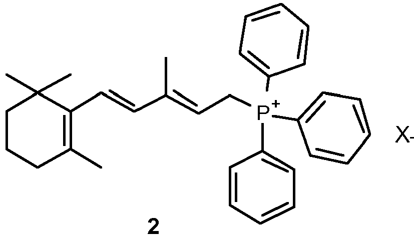 wobei die Molmasse des Anions X- höchstens 200 g/mol beträgt.

Dieses Verfahren bedient sich - im Gegensatz zu jenen sehr aufwendigen und kostspieligen des Standes der Technik - nicht mehr der dort fortwährend eingesetzten Mutterlaugen, die niedrigkonzentriert an Verbindung der allgemeinen Formel 1 sind, ein großes Volumen ausmachen und zudem eine wie bereits erwähnt wenig charakterisierte Mischfraktion umfassen. Vielmehr setzt man als Edukt ein (2E,4E)-C15-Triarylphosphoniumsalz, insbesondere jenes der allgemeinen Formel oder Strukturformel 2 ein. Durch dieses Verfahren sind erstmalig auch die aus der Raktionsmischung der Phosphoniumsalzsynthese gewonnen Kristalle, insbesondere jene der allgemeinen Formel 2, direkt verwendbar für die Herstellung von Verbindungen der allgemeinen Formel 1, einhergehend mit einer erheblichen Steigerung der Ausbeute an Verbindung 1. Denn nunmehr ergibt sich die Menge an für eine sich anschließende Wittig-Reaktion zur Verfügung stehende Verbindung 1 nicht einzig aus dem Anteil, der aus der Mutterlauge gewonnen wird, sondern aus der Summe des Anteils aus der Mutterlauge zuzüglich jenes Anteils an Verbindung der allgemeinen Formel 1, der nach dem erfindungsgemäßen Verfahren gewonnen wird.

Der Fachmann hätte nicht erwartet, dass sich Verbindungen der allgemeinen Formel 2 in solche der allgemeinen Formel 1 isomerisieren lassen, denn generell treten insbesondere bei Temperaturen oberhalb von 50 °C auf nachfolgender Seite gezeigte Reaktionen an ungesättigten Phosphoniumsalzen auf.

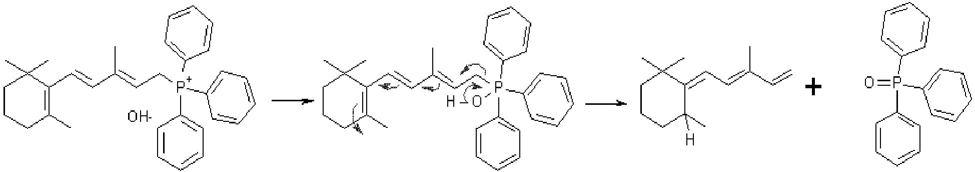

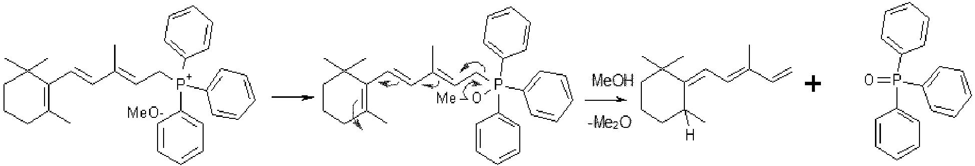

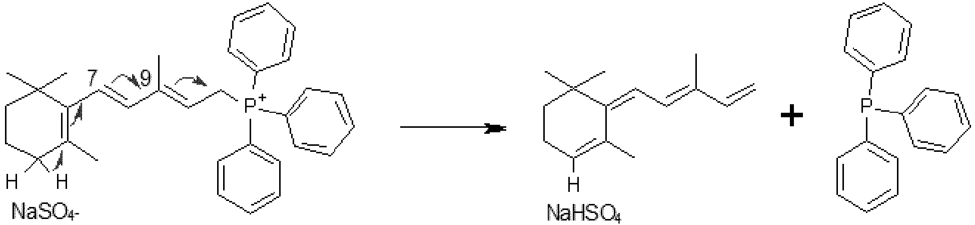

Man erkennt, dass es in Anwesenheit verschiedener Nukleophile oder beim Zugegensein von Natriumsulfat zu einer Abspaltung oder Verschiebung eines Protons und einer anschließenden Freisetzung von Triphenylphosphinoxid kommt. Auch die erfindungsgemäß eingesetzten Verbindungen der allgemeinen Formel 2 sollten hier keine Ausnahme machen und in der auf der letzten Seite gezeigten Weise reagieren.

Experimentell wurde jedoch etwas anderes gefunden, nämlich die unerwartete Aufrechterhaltung der Summenformel und die Isomerisierung von einem (2E,4E)-C15-Triarylphosphoniumsalz in ein (2Z,4E)-C15-Triarylphosphoniumsalz. Selbst bei Temperaturen von 130 °C, 145 °C und sogar bei 180 °C kommt es nicht zur erwarteten Zersetzung der ungesättigten Phosphoniumsalze.

Möchte man einen möglichst reinen und zudem hohen Anteil an Verbindung der allgemeinen Formel 1 erhalten, sieht eine weitere Ausgestaltung der Erfindung vor, dass man das [(2Z,4E)-3-methyl-5-(2,6,6-trimethylcyclohexen-1-yl)penta-2,4-dienyl]-triphenyl-phosphoniumsalz der allgemeinen Formel 1 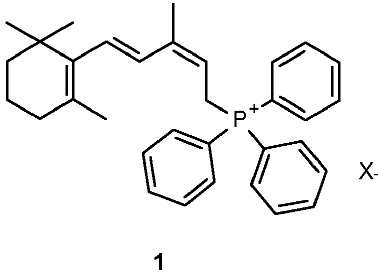 verfahrensgemäß herstellt durch Isomerisierung des reinen, gut charakterisierten Feststoffs [(2E,4E)-3-methyl-5-(2,6,6-trimethylcyclohexen-1-yl)penta-2,4-dienyl]-triphenyl-phosphoniumsalz der allgemeinen Formel 2, 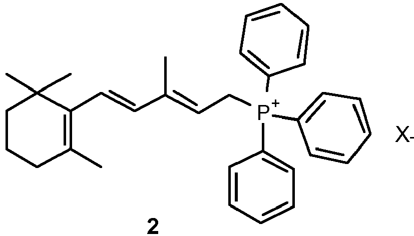 wobei die Molmasse des Anions X- höchstens 200 g/mol beträgt.

Unter dem Begriff "reiner gut charakterisierter Feststoff" ist im Sinne der Erfindung ausschließlich eine durch Kristallisation oder andere Reinigungsverfahren gereinigte Form von Verbindungen nach der allgemeinen Formel 2 zu verstehen und in einer besonders bevorzugten Ausführungsform eine kristalline Form von Verbindungen nach der allgemeinen Formel 2.

In einer noch anderen Ausführungsform, die auf hohe Ausbeuten an Verbindung der allgemeinem Formel 1 abzielt, sieht das erfindungsgemäße Verfahren vor [(2Z,4E)-3-methyl-5-(2,6,6-trimethylcyclohexen-1-yl)penta-2,4-dienyl]-triphenyl-phosphoniumsalz der allgemeinen Formel 1 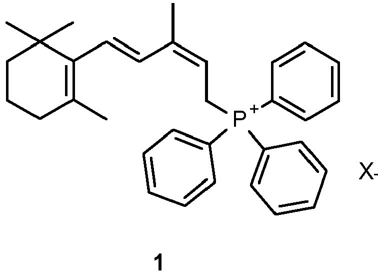 durch Isomerisierung von [(2E,4E)-3-methyl-5-(2,6,6-trimethylcyclohexen-1-yl)penta-2,4-dienyl]triphenyl-phosphoniumsalz der allgemeinen Formel 2 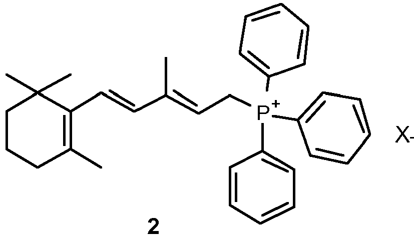 herzustellen, wobei die Molmasse des Anions X- höchstens 200 g/mol beträgt und die Verbindung der allgemeinen Formel 2 gewonnen wird durch Kristallisation aus der Reaktionsmischung der Reaktion zur Herstellung dieser Verbindung 2 und zudem durch Kristallisation aus einem Reaktionsgemisch, das nach erfindungsgemäßer Verfahrensführung, sprich Isomerisierung entsteht.

Bei dieser Ausführungsform, bei der die Verbindung nach der allgemeinen Formel 2 nicht vollständig nach dem erfindungsgemäßen Verfahren isomerisiert wird, bringt man unreagierte Verbindung der allgemeinen Formel 2 wieder mit neu eingesetzter Verbindung der allgemeinen Formel 2 (erhalten nach Kristallisation und/oder direkt aus der Mutterlauge der Reaktion zur Herstellung von Verbindung 2) zusammen und erhöht dadurch die Gesamtausbeute an Verbindung der allgemeinen Formel 1 einhergehend mit einer Reduzierung des Anteils an nicht umgesetzter Verbindung der allgemeinen Formel 2. Diese Art der Rückführung nicht umgesetzter Verbindung der allgemeinen Formel 2 lässt sich kontinuierlich, also im Kreisprozess durchführen, aber auch diskontinuierlich.

Nach der Erfindung bedeutet "kontinulierlich" oder "im Kreisprozeß", die Reaktionslösung oder das Reaktionsgemisch fortwährend durch ein erwärmtes Rohr zu pumpen, wobei an einer Stelle hinter dem erwärmten Rohr laufend Reaktionsgemisch entnommen und an einer anderen Stelle vor dem erwärmten Rohr ständig Verbindung der allgemeinen Formel 2 zugeführt wird.

"Diskontinurierlich" heißt im Sinne dieser Offenbarung, das Reaktionsgefäß oder den Reaktor befüllen, die erfindungsgemäße Reaktion durchführen, das Reaktionsgemisch abkühlen, den Reaktor oder das Reaktionsgefäß entleeren und wieder von vorne beginnen.

Der Begriff "olefinische Doppelbindung" im Rahmen dieser Erfindung umfasst jede Doppelbindung zwischen zwei Kohlenstoffatomen, die nicht Bestandteil eines aromatischen oder zyklischen Kohlenstoffrings oder eines Kohlenstoff-Heterozyklus ist.

Unter der Bezeichnung "olefinisch ungesättigtes Phosphoniumsalz mit wenigstens zwei olefinischen Doppelbindungen" ist jedes Phosphoniumsalz zu verstehen, dass wenigstens zwei Kohlenstoff-Kohlenstoff Doppelbindungen enthält, die nicht einem aromatischen oder zyklischen Kohlenstoff-Ringsystem oder Kohlenstoff-Heterozyklus zuzuordnen sind.

Ein "C15-Triarylphosphoniumsalz" im Rahmen dieser Offenbarung ist ein olefinisch ungesättigtes Phosphoniumsalz, welches am Phosphoratom drei aromatische Reste und einen Kohlenstoffrest aus 15 C-Atomen trägt. Dieser Kohlenstoffrest aus 15 C-Atomen enthält wenigstens zwei olefinische Doppelbindungen in jeweils beliebiger Konformation.

Bei einem "(2E,4E)-C15-Triarylphosphoniumsalz" besitzt die im Kohlenstoffrest aus 15 C-Atomen vom Phosphor aus gesehene Doppelbindung an Position 2 eine E Konformation und jene an Position 4 ebenfalls eine solche E-Konformation.

Ein "(2Z,4E)- C15-Triarylphosphoniumsalz" unterscheidet sich vom entsprechenden 2E,4E-Isomeren durch eine Z-konfigurierte Doppelbindung an Position 2 vom Phosphor aus gesehen.

Das erfindungsgemäße Verfahren ist auf eine Vielzahl von olefinisch ungesättigten Phosphoniumsalzen mit wenigstens zwei olefinischen Doppelbindungen anwendbar. So lassen sich alle diejenigen derartigen Salze verwenden, deren Anion X- ausgewählt ist aus der Gruppe bestehend aus Halogenid, Dihydrogenphosphat, Hydrogenphosphat, Phosphat, Nitrat, Hydrogensulfat, Sulfat, Chlorat, Perchlorat, Tetrafluoroborat, C1 - C4-Alkanoaten, insbesondere Acetat, C1 - C7-Sulfonaten, insbesondere Methansulfonat, Benzolsulfonat und Toluolsulfonat. Mithin sind durch die Art des Gegenions X- oder Anions X- dem erfindungsgemäßen Verfahren keine Grenzen gesetzt.

Durch zeitintensive Versuche wurde ermittelt, dass gute Ausbeuten und angemessene Reaktionszeiten erreicht werden, wenn X- ausgewählt ist aus der Gruppe bestehend aus Fluorid, Chlorid, Bromid, Iodid, Sulfat, Hydrogensulfat, Methansulfonat, Benzolsulfonat und Toluolsulfonat.

Erfindungsgemäße C1 - C4-Alkanoate umfassen Formiat, Acetat, Propionat, Butyrat, Isobutyrat sprich Anionen der entsprechenden Carbonsäure. C1 - C7-Sulfonate im Sinne der Erfindung umfassen Methansulfonat gleichbedeutend mit Mesylat, Trifluoromethansulfonat gleichbedeutend mit Triflat, Benzolsulfonat und Toluolsulfonat.

In einer kostengünstigen Ausführung des erfinderischen Verfahrens ist die Isomerisierung eine thermische Isomerisierung. Gerade im großtechnischen Maßstab kommt dieser Ausgestaltung Bedeutung zu, da bei einer kontinuierlichen und mehr noch bei einer diskontinuierlichen Verfahrensführung eine Aufheizung bzw. Abkühlung des Reaktionsgemisches viel leichter zu bewerkstelligen ist, als ein selektives Anbringen sowie An- und Abschalten von für eine Fotoisomerisierung nötigen Lichtquellen. Bei diesen handelt es sich meist um UV-Leuchten, die teuer in der Anschaffung und gerade bei häufigem Ein- und Ausschalten störanfällig sind.

Die Isomerisierung nach der Erfindung findet bei erhöhter Temperatur statt. Im Allgemeinen werden die olefinisch ungesättigten Phosphoniumsalze mit wenigstens zwei olefinischen Doppelbindungen in einem Temperaturbereich von 50 °C bis 200 °C, vorzugsweise von 100 °C bis 180 °C und weiter bevorzugt in einem Temperaturbereich von 120 °C bis 180 °C isomerisiert. Ein besonders bevorzugter Temperaturbereich für die Isomerisierung ist jener von 130 °C bis 180 °C. Arbeitet man in dem beanspruchten Temperaturfenster, werden vernünftige Ausbeuten bei nicht zu hohem Energieverbrauch erhalten. Dies gilt auch gerade dann, wenn nicht reagierte Verbindung der allgemeinen Formel 2 wieder dem erfindungsgemäßen Isomerisierungsverfahren zugeführt wird. In besonderer Weise trifft dies auf eine Ausführung zu, bei der verfahrensgemäß zur Herstellung von [(2Z,4E)-3-methyl-5-(2,6,6-trimethylcyclohexen-1-yl)penta-2,4-dienyl]-triphenyl-phosphoniumhydrogensulfat durch thermische Isomerisierung das [(2E,4E)-3-methyl-5-(2,6,6-trimethylcyclohexen-1-yl)penta-2,4-dienyl]-triphenyl-phosphoniumhydrogensulfat in einem Temperaturbereich von 50 bis 200 °C, vorzugsweise von 100 °C bis 180 °C und besonders bevorzugt in einem Bereich von 120 bis 180 °C reagiert wird. Besonders bevorzugt ist es auch für diese letztgenannte Ausführungsform, in einem Temperaturbereich von 130 °C bis 180 °C zu arbeiten.

Aufgrund der insbesondere bei Temperaturen von 50 °C und höher zu beobachtenden zunehmenden Oxidationsempfindlichkeit der C15-Triarylphosphoniumsalze und insbesondere der in Anspruch 1 eingesetzten Verbindungen führt man das erfindungsgemäße Verfahren unter Inertgas durch, aus Kostengründen vorzugsweise unter Stickstoff oder Argon.

Unter "Inertgas" im Sinne der Erfindung ist jedes Gas oder jede Gasmischung zu verstehen, die reaktionsträge ist und unter wenigstens einer der Verbindungen Neon, Argon, Krypton oder Stickstoff ausgewählt ist.

In einer weiteren Ausgestaltung des erfinderischen Verfahrens führt man die Isomerisierung in einem Druckbereich von 1 bis 100 bar, vorzugsweise von 5 bis 80 bar, noch bevorzugter in einem Druckbereich von 8 bis 50 bar und am bevorzugtesten in einem Druckbereich von 10 bis 25 bar durch. Unter Überdruck zu arbeiten, erlaubt es, die Isomerisierungsreaktion nach der Erfindung bei vergleichsweise niedrigeren Temperaturen zu betreiben. Dies reduziert die thermische Belastung für die eingesetzten Verbindungen und wirkt sich ausbeutesteigernd aus. Setzt man niedrig siedende Lösungsmittel ein, so ist es vorteilhaft und mitunter unumgänglich, unter erhöhtem Druck zu arbeiten, um das Lösungsmittel während der Reaktion nicht in Teilen oder vollständig in die Dampfphase zu überführen und dadurch sowohl die Reaktionszeit zu verlängern als auch die Ausbeute an (2Z,4E)- C15-Triarylphosphoniumsalz zu schmälern.

In einer in kurzer Zeit hohe Ausbeuten liefernden Variante führt man das erfinderische Verfahren in einem Temperaturbereich von 50 °C bis 200 °C und bei einem Druck von 1 bis 100 bar, vorzugsweise in einem Temperaturbereich von 100 °C bis 180 °C und bei einem Druck von 8 bis 50 bar und am meisten bevorzugt in einem Temperaturbereich von 120 °C bis 180 °C und bei einem Druck von 10 bis 25 bar durch.

Gegenstand einer weiteren Abwandlung der Erfindung ist es, die Isomerisierung in einem Lösungsmittel oder einem Lösungsmittelgemisch durchzuführen. Viele der olefinisch ungesättigten Phosphoniumsalze mit wenigstens zwei olefinischen Doppelbindungen in der E-Konformation, insbesondere die meisten der (2E,4E)-C15-Triarylphosphoniumsalze lassen sich nicht in Substanz in eine flüssige Form überführen und nach dem erfindungsgemäßen Verfahren reagieren. Genauso ist es nicht möglich, sie als Feststoff dem besagten Verfahren zu unterwerfen, da sie sich zumindest in Teilen zersetzen würden. Deshalb lassen sich solche Entitäten nur in einem Lösungsmittel verfahrensgemäß umsetzen.

Die Isomerisierung nach der Erfindung führt man aus den vorab genannten Gründen vorzugsweise so durch, dass man das C15-Triarylphosphoniumsalz der allgemeinen Formel 2, gelöst oder suspendiert in einem geeigneten Lösungsmittel, erhitzt. Um eine möglichst schnelle Reaktion einhergehend mit einer möglichst kurzen thermischen Belastung der in Rede stehenden Verbindung zu erreichen, ist die Isomerisierung im gelösten Zustand die bevorzugte Fahrweise.

Besonders für das Verfahren nach der Erfindung geeignete Lösungsmittel oder Lösungsmittelgemische sind diejenigen, die aus der Gruppe bestehend aus Toluol, Xylol, Dioxan, THF, DMF, DMSO, C1 - C6-Alkohol, C3 - C7-Keton, Ethylacetat, Propylacetat, Butylacetat, Ethylpropionat oder aus einer Mischung wenigstens zweier dieser Verbindungen auswählt sind. Sie lassen sich zwar mittels unterschiedlicher Verfahren, aber dennoch leicht wieder vom verfahrensgemäß erhaltenen Produkt abtrennen und gewährleisten, dass so gut wie keine Nebenprodukte anfallen oder aber das Nebenproduktspektrum recht überschaubar ist. Als in dieser Hinsicht besonders effektiv hat sich gezeigt, das Lösungsmittel oder das Lösungsmittelgemisch aus der Gruppe bestehend aus Methanol, Ethylacetat, Propylacetat oder aus einer Mischung wenigstens zweier dieser Verbindungen auszuwählen.

Unter C1 - C6-Alkohol begreift man im Sinne der Erfindung alle Alkohole, die wenigstens ein und höchstens sechs Kohlenstoffatome enthalten. Es sind sowohl primäre, sekundäre als auch tertiäre Alkohole umfasst, wobei den primären Alkoholen der Vorzug vor den sekundären und denen wiederum der Vorzug vor den tertiären Alkoholen zu geben ist. Gleichsam fallen unter die C1 - C6-Alkohole einwertige, zweiwertige und dreiwertige Alkohole. Auch hier haben sich die einwertigen Alkohole als besser geeignet erwiesen als die zweiwertigen und diese wiederum besser geeignet als die dreiwertigen Alkohole. C1 - C6-Alkohole umfassen gemäß der Erfindung wenigstens einen Vertreter ausgewählt aus der Gruppe bestehend aus Methanol, Ethanol, 2-Methoxyethanol, n-Propanol, Isopropanol, 2-Methoxy-1-propanol, n-Butanol, Isobutanol oder Iso-Butylalkohol oder sec-Butylalkohol, tert.-Butanol oder tert.-Butylalkohol, n-Pentanol, 2-Pentanol, Isopentylalkohol, Isoamylalkohol oder 3-Pentanol, 2-Methyl-1-butanol, Neopentylalkohol, tert.-Pentylalkohol, n-Hexanol, 1.3-Dimethylbutanol oder Amylmethylalkohol, Diacetonalkohol, Methylisobutylcarbinol, tert.-Hexylalkohol, Cyclohexanol, Ethylenglykol, Propylenglykol, 1,2-Propandiol, 1,3-Propandiol, 1,2-Butandiol, 1,3-Butandiol, 1,4-Butandiol, 2,3-Butandiol, Diethylenglykol, 2-Methyl-2,3-butandiol, 1,5-Pentandiol, 1,4-Pentandiol, 1,3-Pentandiol, 1,2-Pentandiol, 2,4-Pentandiol, Neopentylglykol, 1,6-Hexandiol, 1,5 Hexandiol, 1,4-Hexandiol, 1,3-Hexandiol, 2-Methyl-2,4-pentandiol, Pinakol oder 2,3-Dimethyl-2,3-butandiol, Glycerin, 1,2,3-Butantriol, 1,2,4-Butantriol, 1,2,5-Hexantriol, 1,2,6-Hexantriol, Trimethylolpropan.

C3 - C7-Ketone umfassen im Rahmen dieser Offenbarung wenigstens eine Verbindung, die ausgewählt ist aus der Gruppe bestehend aus Aceton, Methyl-ethyl-keton oder Butanon, Methyl-n-propylketon, Methyl-isopropylketon, Diethylketon, Gamma-Butyrolacton, Methyl-n-butylketon, Methylisobutylketon, Methyl-2-pyrrolidon, Di-n-propylketon, Diisopropylketon, Cyclohexanon, Ethyl-n-butylketon, Diacetonalkohol, Acetonylaceton, Methyl-n-Amylketon oder 2-Heptanon, Methyl-isoamylketon, Methylcyclohexanon. In gleicher Weise sind auch Mischungen aus zwei oder mehreren der vorab genannten Verbindungen unter den Begriff C3 - C7-Ketone zu fassen.

Aus Kostengründen und zudem, weil es sich leicht aus dem Reaktionsgemisch wieder abtrennen lässt, sieht das erfindungsgemäße Verfahren in einer besonders bevorzugten Ausführung vor, als Lösungsmittel Methanol zu verwenden.

Diese Ausführung ist zudem noch dadurch verbessert, dass man die erfinderische Isomerisierung in Methanol als Lösungsmittel bei 10 bis 30 bar, vorzugsweise bei 13 bis 20 bar und besonders bevorzugt bei 13 bis 16 bar durchführt. Durch diese Maßnahme profitiert man nicht nur von einem preisgünstigen und leicht wieder zu entfernenden Lösungsmittel, sondern wirkt außerdem einer etwaigen Bildung von Neben- oder Abbauprodukten entgegen, da durch die Reaktionsführung unter Druck bei entsprechend niedrigeren Temperaturen gearbeitet werden kann. Hierdurch treten lokale Erhitzungen und mithin besagte Nebenprodukte oder Abbauprodukte in noch geringeren Mengen auf.

Eine weitere Optimierung des erfinderischen Verfahrens zur Herstellung von [(2Z,4E)-3-methyl-5-(2,6,6-trimethylcyclohexen-1-yl)penta-2,4-dienyl]-triphenyl-phosphoniumsalz der allgemeinen Formel 1 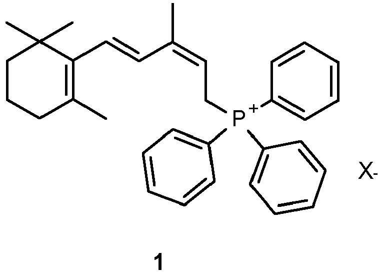 gelingt, durch Isomerisierung von [(2E,4E)-3-methyl-5-(2,6,6-trimethylcyclohexen-1-yl)penta-2,4-dienyl]-triphenyl-phosphoniumsalz der allgemeinen Formel 2, 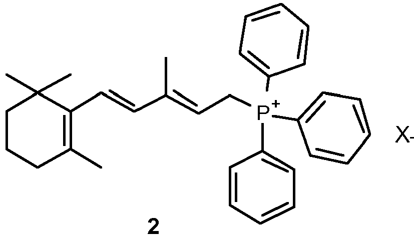 in Methanol in einem Temperaturbereich von 50 °C bis 200 °C und bei einem Druck von 1 bis 100 bar, vorzugsweise in einem Temperaturbereich von 100 °C bis 180 °C und bei einem Druck von 8 bis 50 bar und am meisten bevorzugt in einem Temperaturbereich von 120 °C bis 180 °C und bei einem Druck von 10 bis 25 bar, wobei die Molmasse des Anions X- höchstens 200 g/mol beträgt.

Bestimmte olefinisch ungesättigte Phosphoniumsalze mit wenigstens zwei olefinischen Doppelbindungen jeweils in der E-Konformation lassen sich nur mit großem Zeitaufwand und sehr langsam nach dem Verfahren gemäß Anspruch 1 umsetzen. Dies ist u.a. für derartige olefinisch ungesättigte Phosphoniumsalze mit wenigstens zwei olefinischen Doppelbindungen in der E-Konformation der Fall, die als Gegenion ein Hydrogensulfat aufweisen. Aber auch für diese Verbindungen, insbesondere für das [(2E,4E)-3-methyl-5-(2,6,6-trimethylcyclohexen-1-yl)penta-2,4-dienyl]-triphenyl-phosphoniumhydrogensulfat lassen sich völlig unerwartet und für den Fachmann nicht vorhersehbar nach dem erfindungsgemäßen Verfahren hohe Ausbeuten in angemessener Zeit erzielen, wenn man die Isomerisierung in Gegenwart einer Base durchführt.

Ein Optimum für die Reaktionsgeschwindigkeit wurde erzielt, wenn zur verfahrensgemäßen Isomerisierung die Base in einer solchen Menge zugegeben wird, dass die daraus gebildete Anionen 0,1 bis 1 Moläquivalente bezogen auf Verbindung 2 betragen, vorzugsweise 0,2 bis 0,7 Moläquivalente und besonders bevorzugt 0,25 bis 0,5 Moläquivalente. Unter einem Moläquivalent ist jene Mol-Menge an gebildeten Anionen zu verstehen, die der Mol-Menge an Verbindung 2 entspricht. Bei dieser Umsetzung fällt in der Regel das Sulfat der eingesetzten Base als Feststoff aus.

Basen im Sinne des offenbarten Verfahrens sind:
Wenigstens eine organische Base ausgewählt aus der Gruppe bestehend aus 1-Amino-2-propanol, Aminoguanidinen, Arginin, Benzylaminen, Benzyldimethylamin, N,N'-Bis(2-amino-ethyl) 1,2-diaminoethan, Bis(2-aminoethyl)aminen, Bis(2-fluoro-2,2-dinitroethyl)amin, 1,2-Bis-(dimethylamino)ethan, Butylaminen, 2-Butylaminen, Butylethylaminen, Calziummethanolat, Cyclohexylaminen, Cyclopentylaminen, Di-2-butylaminen, 1,4-Diaminobenzol, 1,2-Diaminoethan, 1,2-Diaminopropan, 1,3-Diaminopropan, 1,4-Diazabicyclo[2.2.2]octan, Dibutylamin, 3-Dibutylaminopropylamin, Diethylamin, 3-Diethylaminopropylamin, Diethylentriamin, Diisobutylamin, Diisopropylamin, 3,3'-Dimethoxy-4,4'-diaminobiphenyl, Dimethylamin, 2-Dimethylaminoethylamin, N,N-Dimethylanilin und dessen Derivate, 1,3-Dimethylbutylamin, 2,6-Dimethylpiperidin und dessen Derivate, 2,2-Dimethylpropylamin, 1,2-Dimethylpropylamin, 1,1-Dimethylpropylamin, N,N-Dimethylpropylamin, Dipropylamin, 5-Ethyl-2-methylpyridin, Ethylamin, Ethyldimethylamin, Ethylendiamin, 1-Ethylpiperidin, 2-Ethylpiperidin, Harnstoff, Hexamethylentetramin, Histidin, N-2-Hydroxyethyl-1,2-diaminoethan, 2-Hydroxyethylamin, Natriummethanolat, Natriumethanolat, Natriumisopropylat, N-2-Hydroxyethyldimethylamin, Isobutylamin, Isopentylamin, Isopropylamin, Kaliummethanolat, Kaliumethanolat, Kaliumpropylat, Kaliumisopropylat, Lithiumdiisopropylamid, Lithiummethanolat, Lithiumethanolat, Lithiumpropylat, Lithiumisopropylat, Lysin, Magnesiummethanolat, Melamin, Methylamin, N-Methylbutylamin, 4-Methylmorpholin, 1-Methylpiperidin, 2-Methylpiperidin, 3-Methylpiperidin, 4-Methylpiperidin, 2-Methylpyridin, N-Methylpyrrolidin, Morpholin und dessen Derivate, Pentylamin, N-Phenylhydroxylamin, Piperazin und dessen Derivate, Piperidin und dessen Derivate, Propylamin, Pyridin und dessen Derivate, Chinolin und dassen Derivate, 1,2,3,6-Tetrahydropyridin und dessen Derivate, 1,3,4,7-Tetramethylisoindol, 1,2,4,5-Tetrazin, Thioharnstoff, 3,6,9-Triaza-11-aminoundecanol, 1,3,5-Triazine, Triethylamin, Trimethylamin, 2,4,6-Tris(dimethylaminomethyl)phenol, Tris(hydroxymethyl)methylamin, Vinylpyridine oder Mischungen dieser Verbindugnen.

Basen im Sinne des offenbarten Verfahrens sind weiterhin:
Wenigstens eine anorganische Base, die ausgewählt ist aus der Gruppe bestehend aus Ammoniak, Ammoniumhydroxid, Bariumhydroxid, Bariumoxid, Bleicarbonat, Bleihydroxid, Caesiumamid, Calciumcarbonat, Calciumhydroxid, Calciumoxid, Kaliumcarbonat, Kaliumhydroxid, Lithiumcarbonat, Lithiumhydroxid, Dilithiumoxid, Magnesiumcarbonat, Magnesiumhydroxid, Magnesiumoxid, Natriumcarbonat, Natriumhydroxid, Dinatriumoxid, Silberoxid, Strontiumhydroxid, Strontiumoxid oder deren Mischungen.

In einer weiter geführten Variante wird das erfinderische Verfahren in Gegenwart einer Base durchgeführt, die ausgewählt ist aus wenigstens einer organischen Base und wenigstens einer anorganischen Base.

Es hat sich für die Verfahrensökonomie als vorteilhaft erwiesen, solche Basen einzusetzen, die beim Abreagieren das Lösungsmittel bilden. Somit führt man in einer bevorzugten Verfahrensvariante die Isomerisierung in Gegenwart einer Base durch, die ausgewählt ist aus der Gruppe bestehend aus Natriummethanolat, Kaliummethanolat, Magnesiummethanolat, Calziummethanolat, Lithiummethanolat.

In einer sehr bevorzugten Ausgestaltung des erfindungsgemäßen Verfahrens stellt man (2Z,4E)-3-methyl-5-(2,6,6-trimethylcyclohexen-1-yl)penta-2,4-dienyl]-triphenyl-phosphoniumsalz 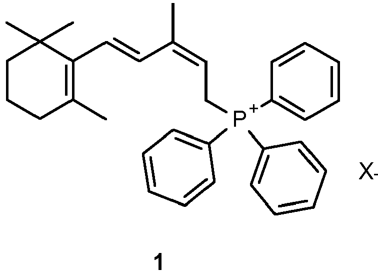 der allgemeinen Formel 1
durch Isomerisierung von [(2E,4E)-3-methyl-5-(2,6,6-trimethylcyclohexen-1-yl)penta-2,4-dienyl]-triphenylphosphorium-hydrogensulfat der Formel 2' 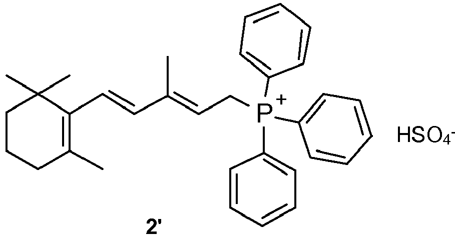 her,
wobei die Molmasse des Anions X- höchstens 200 g/mol beträgt,
indem man die Isomerisierung in Gegenwart einer Base durchführt, die ausgewählt ist aus der Gruppe bestehend aus Natriummethanolat, Kaliummethanolat, Magnesiummethanolat, Calziummethanolat, Lithiummethanolat.

Es wurde geprüft, ob der Zugabezeitpunkt an Base einen Einfluss auf Reaktionsgeschwindigkeit und Ausbeute hat. In der Tat konnte beides positiv beeinflusst werden, wenn man in einer Weiterleitung des erfinderischen Verfahrens die Isomerisierung in Gegenwart einer Base durchführt und letztere bereits vor Beginn der Isomerisierung zugibt.

In einer spezialisierten Weiterführung des erfindungsgemäßen Verfahrens stellt man (2Z,4E)-3-methyl-5-(2,6,6-trimethylcyclohexen-1-yl)penta-2,4-dienyl]-triphenyl-phosphoniumsalz der all gemeinen Formel 1 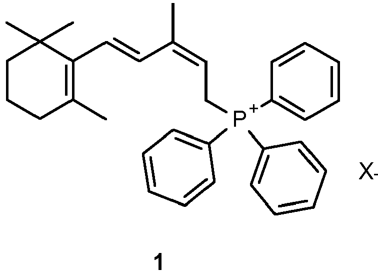 durch Isomerisierung von [(2E,4E)-3-methyl-5-(2,6,6-trimethylcyclohexen-1-yl)penta-2,4-dienyl]-triphenylphosphorium-hydrogensulfat der Formel 2' 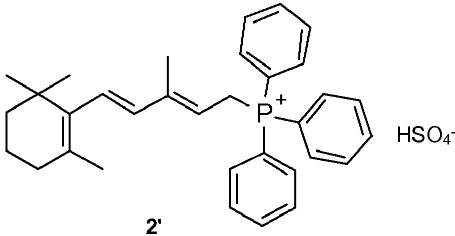 her,
wobei die Molmasse des Anions X- höchstens 200 g/mol beträgt,
indem man die Isomerisierung in Gegenwart einer Base durchführt und letztere bereits vor Beginn der Isomerisierung zugibt.

Besonders ressourcenfreundlich ist es, wenn auch für die vorab genannte verfahrensgemäße Ausführungsform die Base ausgewählt ist aus der Gruppe bestehend aus Natriummethanolat, Kaliummethanolat, Magnesiummethanolat, Calziummethanolat, Lithiummethanolat.

Da die olefinisch ungesättigten Phosphoniumsalze mit wenigstens zwei olefinischen Doppelbindungen unter den Isomerisierungsbedingungen nicht unbegrenzt stabil sind, ist es von Vorteil das Reaktorkonzept so zu wählen, dass ihm eine festgelegte Fahrweise, insbesondere ein isotherme Fahrweise zugrunde liegt und man das Reaktionsgemisch für eine exakt definierte Verweilzeit den Reaktionsbedingungen aussetzt. Nur dann kann ein vorzeitiger Abbau besagter Salze oder das Eintreten von Nebenreaktion vermieden oder zumindest im Ausmaß reduziert werden. Deshalb sieht die Erfindung in einer weiteren Ausgestaltung vor, die Isomerisierung in einem Reaktor mit einem festgelegten Temperaturprofil, insbesondere mit einem isothermen Temperaturprofil, und einer exakt festgelegten Verweilzeit durchzuführen.

"Festgelegtes Temperaturprofil" soll im Lichte dieser Offenbarung heißen, die Temperatur zu Beginn der erfinderischen Isomerisierung, Aufheizgeschwindigkeit, Zwischentemperaturen, Temperaturrampen und Zeiten gleichbleibender Temperatur sowie die Endtemperatur des erfinderischen Isomerisierungsverfahrens exakt festzulegen. Diese exakte Festlegung wirkt ausbeutesteigernd und reaktionsbeschleunigend.

Isothermes Temperaturprofil im Sinne des erfindungsgemäßen Verfahrens bedeutet, die Verbindung der allgemeinen Formel 2 während der gesamten für die Isomerisierung benötigten Reaktionszeit, der exakt festgelegten Verweilzeit, auf einer bestimmten Temperatur zu belassen. Diese Temperatur ist ein Wert, der ausgewählt ist aus den oben bereits angegebenen Temperaturbereichen von 50 °C bis 200 °C, vorzugsweise von 100 °C bis 180 °C, weiter bevorzugt von 120 °C bis 180 °C und besonders bevorzugt von 130 °C bis 180 °C. Es wurde gefunden, dass diese Temperaturen in der Folge ihrer Bevorzugung sich sowohl hinsichtlich Kürze der Reaktionszeit als auch in Bezug auf die Ausbeute und das Nebenproduktspektrum positiv auswirken.

Unter dem Begriff "exakt festgelegte Verweilzeit" ist nach der Erfindung die Zeitspanne oder Dauer zu verstehen, während der die Verbindung mit der allgemeinen Formel 2 der bestimmten Temperatur oder dem festgelegten Temperaturprofil ausgesetzt ist, sprich sich im isothermen Temperaturprofil befindet.

In einer Ausbeute und Reaktionszeit noch optimierenden Weiterleitung des erfinderischen Verfahrens führt man die Isomerisierung in einem Reaktor mit einem festgelegten Temperaturprofil, insbesondere mit einem isothermen Temperaturprofil, und einer exakt festgelegten Verweilzeit durch, die ein ausgewählter Wert innerhalb einer Zeitspanne von 5 bis 35 min, vorzugsweise von 5 bis 25 min und in einer besonders bevorzugten Variante von 10 bis 25 min ist.

Ein dem vorab Gesagten Rechnung tragendes weitergeleitetes Verfahren sieht deshalb vor, zur Herstellung von [(2Z,4E)-3-methyl-5-(2,6,6-trimethylcyclohexen-1-yl)penta-2,4-dienyl]-triphenyl-phosphoniumsalz der allgemeinen Formel 1 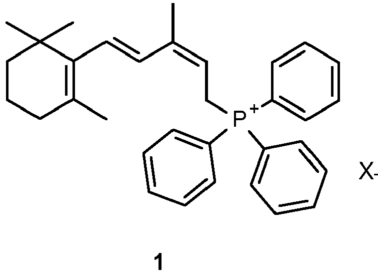 durch Isomerisierung von [(2E,4E)-3-methyl-5-(2,6,6-trimethylcyclohexen-1-yl)penta-2,4-dienyl]-triphenyl-phosphoniumsalz der allgemeinen Formel 2, 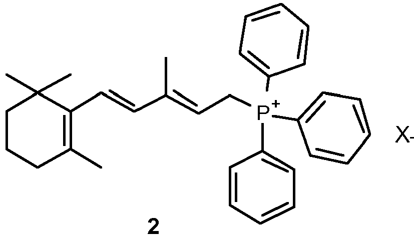 wobei die Molmasse des Anions X- höchstens 200 g/mol beträgt,
die Isomerisierung in einem Reaktor mit einem isothermen Temperaturprofil bei einer Temperatur von 120 °C bis 180 °C, vorzugsweise von 130 °C bis 160 °C und einer exakt festgelegten Verweilzeit, die ein ausgewählter Wert innerhalb einer Zeitspanne von 10 bis 25 min, vorzugsweise innerhalb einer Zeitspanne von 15 bis 25 min ist. durchzuführen.

Dieses weitergeleitete Verfahren, so wurde festgestellt, eignet sich in besonderer Weise für die Umsetzung einer Verbindung der allgemeinen Formel 2, bei der das Anion X⁻ Hydrogensulfat ist. Es lässt sich mit Hydrogensulfat als Anion X⁻ besonders zeitsparend betreiben, wenn man die Isomerisierung in Gegenwart einer Base durchführt.

In einer anderen Ausführung des erfindungsgemäßen Verfahrens zur Herstellung von [(2Z,4E)-3-methyl-5-(2,6,6-trimethylcyclohexen-1-yl)penta-2,4-dienyl]-triphenyl-phosphoniumsalz der allgemeinen Formel 1 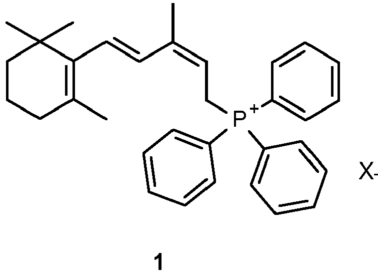 durch Isomerisierung von [(2E,4E)-3-methyl-5-(2,6,6-trimethylcyclohexen-1-yl)penta-2,4-dienyl]-triphenyl-phosphoniumsalz der allgemeinen Formel 2 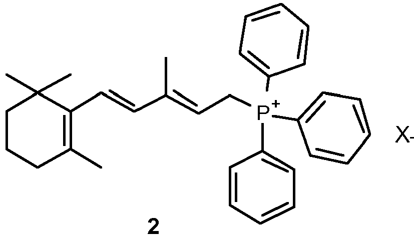 wobei die Molmasse des Anions X- höchstens 200 g/mol beträgt, ist vorgesehen,
die Isomerisierung in einem Reaktor mit einem isothermen Temperaturprofil bei einer Temperatur von 120 °C bis 180 °C, vorzugsweise von 130 °C bis 170 °C und einer exakt festgelegten Verweilzeit, die ein ausgewählter Wert innerhalb einer Zeitspanne von 5 bis 15 min, vorzugsweise innerhalb einer Zeitspanne von 10 bis 15 min ist, durchzuführen.

Diese Ausführung des erfinderischen Verfahrens ist besonders geeignet für eine Verbindung der allgemeinen Formel 2, bei der das Anion X⁻ für Chlorid steht. Besonders gute Ausbeuten an [(2Z,4E)-3-methyl-5-(2,6,6-trimethylcyclohexen-1-yl)penta-2,4-dienyl]-triphenyl-phosphoniumsalz der allgemeinen Formel 1 erreicht man bei einer exakt festgelegten Verweilzeit von 10 min.

Eine weitere Variante des erfinderischen Verfahrens sieht vor, zur Herstellung von [(2Z,4E)-3-methyl-5-(2,6,6-trimethylcyclohexen-1-yl)penta-2,4-dienyl]-triphenyl-phosphoniumsalz der allgemeinen Formel 1 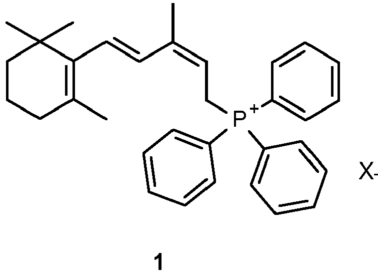 durch Isomerisierung von [(2E,4E)-3-methyl-5-(2,6,6-trimethylcyclohexen-1-yl)penta-2,4-dienyl]-triphenyl-phosphoniumsalz der allgemeinen Formel 2, 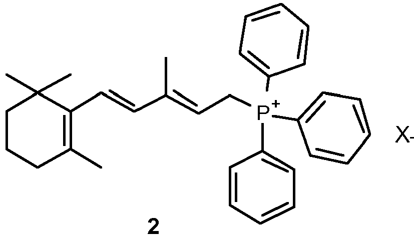 wobei die Molmasse des Anions X⁻ höchstens 200 g/mol beträgt,
die Isomerisierung in einem Reaktor mit einem isothermen Temperaturprofil bei einer Temperatur von 150 °C bis 190 °C, vorzugsweise von 160 °C bis 180 °C und einer exakt festgelegten Verweilzeit, die ein ausgewählter Wert innerhalb einer Zeitspanne von 5 bis 15 min, vorzugsweise innerhalb einer Zeitspanne von 10 bis 15 min ist, durchzuführen.

Dieser Variante des erfinderischen Verfahrens ist eigen, dass sie besonders dann zeitnah gute Ausbeuten liefert, wenn das Anion X- der Verbindung mit der allgemeinen Formel 2 ein Tosylat-Anion ist.

Für das erfinderische Verfahren ist es in Bezug auf Ausbeute, reduziertes Nebenproduktspektrum und Reaktionsgeschwindigkeit von Vorteil, wenn mit einem festgelegten Temperaturprofil, insbesondere mit einem isothermen Temperaturprofil und einer exakt festgelegten Verweilzeit gearbeitet wird. Gleichzeitig trägt auch eine schnelle und homogene Durchmischung der Reaktanden bzw. des Reaktionsgemisches hierzu bei. In eindrucksvoller Weise wird man diesen Anforderungen gerecht, wenn man in einer Fortführung der Erfindung als Reaktor einen Mikrowellenreaktor oder einen Durchflussrohrreaktor verwendet.

Ein Durchflussrohrreaktor im Sinne der Erfindung ist ein Gefäß mit einem Einlass und einem Auslass, durch das kontinuierlich oder diskontinuierlich Reaktionsgemisch gepumpt wird. Die Pumpgeschwindigkeit ist so einstellbar, dass das Reaktionsgemisch die exakt festgelegte Verweilzeit im Durchflussreaktor verweilt. Während dieser Verweilzeit wird der Durchflussrohrreaktor so beheizt, dass das festgelegte Temperaturprofil, die bestimmte Temperatur oder der beanspruchte Temperaturbereich über das Volumen des Durchflussrohrreaktors verteilt konstant ist. Mithin erfährt das Reaktionsgemisch eine ausbeutesteigernd wirkende gleichmäßige Temperierung entlang des Durchflussrohrreaktors, die durch Betätigen einer in besagtem Reaktor befindlichen Rührvorrichtung insbesondere zu Beginn der erfinderischen Reaktion noch schneller erreichbar ist.

Ein erfindungsgemäßer Mikrowellenreaktor ist ein Behältnis, in dem das Reaktionsgemisch mittels Mikrowellen auf das festgelegte Temperaturprofil, auf die bestimmte Temperatur oder auf den beanspruchten Temperaturbereich erwärmt wird. Die Erwärmung durch Mikrowellen bietet den Vorteil, dass die Wärme sehr gleichmäßig verteilt ist. Weil die Erwärmung vom Inneren des Reaktionsraumes nach außen hin stattfindet, ist eine, u.U. rührergetriebene, homogene Durchmischung des Reaktionsgemisches viel leichter möglich, als bei einer konventionellen Heizquelle.

In Fällen, in denen die Isomerisierung nach dem erfindungsgemäßen Verfahren zu einem Gemisch der olefinisch ungesättigten Phosphoniumsalze mit wenigstens zwei olefinischen Doppelbindungen, insbesondere der Verbindungen mit der allgemeinen Formel 1 und jenen mit der allgemeinen Formel 2 führt, ist es erforderlich, diese Verbindungen voneinander zu separieren. Deshalb besteht eine Fortführung des besagten Verfahrens darin, nach der Isomerisierung unreagierte Verbindungen der allgemeinen Formel 2 als Feststoff abzutrennen sowie das anfallende Filtrat zu isolieren. Es lässt sich direkt in sukzessiven Reaktionsschritten weiterverarbeiten.

Ausbeutesteigernd wirkt sich auch die Erweiterung des erfindungsgemäßen Verfahrens aus, nach der Isomerisierung gegebenenfalls nicht reagiertes Ausgangsmaterial der allgemeinen Formel 2 abzutrennen und rückzuführen.

Mit "nach der Isomerisierung" ist der Zeitpunkt gemeint, zu dem man das Reaktionsgemisch aus einem Reaktionsgefäß oder aus dem Reaktor, in dem es sich unter dem festgelegten Temperaturprofil, insbesondere unter dem isothermen Temperaturprofil oder bei der bestimmten Temperatur oder im beanspruchten Temperaturbereich, und für eine exakt festgelegte Verweilzeit befand, herausbefördert.

Beim Ausgangsmaterial handelt es sich um das olefinisch ungesättigte Phosphoniumsalz mit wenigstens zwei olefinisch ungesättigten Doppelbindungen, insbesondere um das C15-Triaryl-phosphoniumsalz und ganz besonders um das (2E,4E)-C15-Triarylphosphoniumsalz der allgemeinen Formel 2 in Anwesenheit des Lösungsmittels oder aber lösungsmittelfrei. Die exozyklischen Doppelbindungen aller oder des überwiegenden Teils der unter das Ausgangsmaterial fallenden Verbindungen haben eine allE oder all trans Konformation.

Unter dem Begriff "Abtrennen" von gegebenenfalls nicht reagiertem Ausgangsmaterial versteht man jegliches Entfernen des besagten Ausgangsmaterials aus dem Reaktionsgemisch. Hierunter fallen die Methoden Extraktion sowie jegliche Art chromatografischer Trennmethoden.

Es hat sich gezeigt, dass das Ausgangsmaterial, insbesondere die Verbindungen nach der allgemeinen Formel 2 sich als Feststoff aus einer Lösung abscheiden lassen, wohingegen jene olefinisch ungesättigten Phosphoniumsalze mit wenigstens zwei olefinischen Doppelbindungen, wovon eine eine Z- und eine weitere eine E-Konformation besitzt, insbesondere jene C15-Triarylphosphoniumsalze mit einer solchen Konformation und ganz besonders die Verbindungen nach der allgemeinen Formel 1 in Lösung bleiben. Deshalb sieht das erfinderische Verfahren in einer kostengünstigen und zeitsparenden Weiterführung vor, dass nach der Isomerisierung gegebenenfalls nicht reagiertes Ausgangsmaterial der allgemeinen Formel 2 durch Kristallisation abgetrennt und rückgeführt wird.

Manche olefinisch ungesättigten Phosphoniumsalze mit wenigstens zwei olefinischen Doppelbindungen, die beide eine E-Konformation besitzen, insbesondere manche C15-Triarylphosphoniumsalze dieses Typs und im Besonderen manche (2E,4E)-C15-Triarylphosphoniumsalze der allgemeinen Formel 2 lassen sich nicht nur nicht vollständig in das entsprechende Phosphoniumsalz mit wenigstens zwei olefinischen Doppelbindungen, wovon eine eine Z- und eine weitere eine E-Konformation besitzt, überführen, sondern fallen nach Ende der Isomerisierung auch nicht ohne weiteres aus dem Reaktionsgemisch aus. Diesem Problem trägt das erfinderische Verfahren in einer Ausgestaltung dadurch Rechnung, dass nach der Isomerisierung gegebenenfalls nicht reagiertes Ausgangsmaterial der allgemeinen Formel 2 vom Lösungsmittel befreit, in einem die Kristallisation des [(2E,4E)-3-methyl-5-(2,6,6-trimethylcyclohexen-1-yl)penta-2,4-dienyl]-triphenyl-phosphoniumsalzes fördernden Lösungsmittel oder Lösungsmittelgemisch, vorzugsweise in einem verzweigten Alkohol und besonders bevorzugt in Isopropanol aufgenommen, durch Kristallisation abgetrennt und rückgeführt wird.

Der Begriff "rückgeführt" nach der Erfindung ist breit auszulegen. Er bedeutet, das in einem separaten Aufbau oder einer abgetrennten Apparatur vom Reaktionsgemisch abgetrennte Ausgangsmaterial wieder der Isomerisierung zuzuführen. Er bedeutet jedoch genauso, das erfindungsgemäße Verfahren im Kreis zu führen, an einer Stelle des Kreislaufs das verbleibende Ausgangsmaterial abzutrennen und es an anderer Stelle wieder dem Kreislauf zuzuführen.

Das vorzugsweise durch Kristallisation abgetrennte Ausgangsmaterial lässt sich als Feststoff wieder rückführen. Es hat sich jedoch gezeigt, dass dies zu einer schlechteren Durchmischung und zu Inhomogenität im Reaktionsgemisch führt, einhergehend mit Ausbeuteeinbußen. Deshalb sieht eine weitergeführte Ausführung des Verfahrens nach der Erfindung vor, das nach der Isomerisierung gegebenenfalls nicht reagierte Ausgangsmaterial der allgemeinen Formel 2 durch Kristallisation abzutrennen, den dabei erhaltenen Feststoff im Lösungsmittel oder im Lösungsmittelgemisch der Isomerisierung wieder aufzulösen und rückzuführen. Insbesondere sieht diese weitergeführte Ausführung vor, das nach der Isomerisierung gegebenenfalls nicht reagierte Ausgangsmaterial der allgemeinen Formel 2 vom Lösungsmittel zu befreien, es in einem die Kristallisation des [(2E,4E)-3-methyl-5-(2,6,6-trimethylcyclohexen-1-yl)penta-2,4-dienyl]-triphenyl-phosphoniumsalzes fördernden Lösungsmittel oder Lösungsmittelgemisch, vorzugsweise in einem verzweigten Alkohol und besonders bevorzugt in Isopropanol aufzunehmen, durch Kristallisation abzutrennen, den dabei erhaltenen Feststoff im Lösungsmittel oder im Lösungsmittelgemisch der Isomerisierung wieder aufzulösen und rückzuführen.

Die Kristallisation des [(2E,4E)-3-methyl-5-(2,6,6-trimethylcyclohexen-1-yl)penta-2,4-dienyl]-triphenyl-phosphoniumsalzes fördernde Lösungsmittel oder Lösungsmittelgemische umfassen neben Isopropanol auch Isopropanol, das mit geringen Mengen eines Kohlenwasserstoffs, vorzugsweise Heptan versetzt ist.

Ein derartiger Kohlenwasserstoff ist ausgewählt aus der Gruppe von Kohlenwasserstoffen umfassend wenigstens 5 Kohlenstoffatome und höchstens 10 Kohlenstoffatome. Insbesondere ist er ausgewählt aus der Gruppe umfassend n-Pentan, Iso- und tert-Pentan jeweils in allen seinen isomeren Formen, n-Hexan sowie alle Hexanisomere, n-Heptan sowie alle Isomere des Heptans, n-Octan sowie alle Octanisomere, n-Nonan sowie alle Isomere des Nonans, n-Dekan sowie alle Dekanisomere, Toluol, alkylsubstituierte Benzole, wobei Alkyl 1 bis 5 Kohlenstoffatome umfasst und aus Mischungen wenigstens zweier der vorab genannten Einzelverbindungen. Diese Einzelverbindungen schließen im Besonderen ein Pentan, Cyclopentan, Methylcyclopentan, Hexan, Cyclohexan, Heptan, Methylcyclohexan, n-Octan, 2-Methylheptan, 3-Methylheptan, 4-Methylheptan, 2,2-Dimethylhexan, 2,3-Dimethylhexan, 2,4-Dimethylhexan, 2,5-Dimethylhexan, 3,3-Dimethylhexan, 3,4-Dimethylhexan, 3-Ethylhexan, 2,2,3-Trimethylpentan, 2,2,4-Trimethylpentan (iso-Octan), 2,3,3-Trimethylpentan, 2,3,4-Trimethylpentan, 3-Ethyl-2-methylpentan, 3-Ethyl-3-methylpentan, 2,2,3,3-Tetramethylbutan.

Nachdem man das Ausgangsmaterial wie vorgehend beschrieben, abgetrennt hat, bleibt in der Regel ein meist beige bis braun gefärbtes Öl oder ein im entsprechenden Lösungsmittel gelöstes Öl des (2Z,4E)- C15-Triarylphosphoniumsalzes, insbesondere des [(2Z,4E)-3-methyl-5-(2,6,6-trimethylcyclohexen-1-yl)penta-2,4-dienyl]-triphenyl-phosphoniumsalz der allgemeinen Formel 1 mit einer Reinheit von größer 90 %, vorzugsweise mit einer Reinheit von größer 95 % und besonders bevorzugt mit einer Reinheit von großer 98 % bezogen auf noch vorhandene Verunreinigungen zurück.

In einer besonderen Weiterführung sieht das erfindungsgemäße Verfahren vor, dass man nach der Isomerisierung das vorhandene Lösungsmittel oder das Lösungsmittelgemisch gegen einen Alkohol, vorzugsweise gegen einen verzweigten Alkohol und besonders bevorzugt gegen Isopropanol austauscht, einen bei Raumtemperatur flüssigen Kohlenwasserstoff hinzugibt, auf eine Temperatur im Bereich von -30 °C bis 20 °C, vorzugsweise auf eine Temperatur im Bereich von -30 °C bis 10 °C abkühlt, bei dieser Temperatur inkubiert und den erhaltenen Feststoff abtrennt. Diese Ausgestaltung des erfinderischen Verfahrens ist für alle verfahrensgemäß eingesetzten olefinisch ungesättigten Phosphoniumsalze mit wenigstens zwei olefinischen Doppelbindungen anwendbar. Sie ist kostengünstig und einfach in der Durchführung und führt zu sehr reinen (2Z,4E)- C15-Triarylphosphoniumsalzen.

In einer noch anderen Ausgestaltung verlangt das erfinderische Verfahren, dass man nach der Isomerisierung in Gegenwart von Base das vorhandene Lösungsmittel oder das Lösungsmittelgemisch gegen einen Alkohol, vorzugsweise gegen einen verzweigten Alkohol und besonders bevorzugt gegen Isopropanol austauscht, mit einer Säure auf einen pH-Wert von 0 bis 2 ansäuert, einen bei Raumtemperatur flüssigen Kohlenwasserstoff hinzugibt, auf eine Temperatur im Bereich von -30 °C bis 20 °C, vorzugsweise auf eine Temperatur im Bereich von -30 °C bis 10 °C abkühlt, bei dieser Temperatur inkubiert und den erhaltenen Feststoff abtrennt.

Diese Ausgestaltung des erfinderischen Verfahrens ist für alle verfahrensgemäß eingesetzten olefinisch ungesättigten Phosphoniumsalze mit wenigstens zwei olefinischen Doppelbindungen anwendbar, wenngleich nicht zwingend erforderlich, hat sich allerdings hinsichtlich Ausbeute und Reaktionszeit besonders bewährt bei denjenigen olefinisch ungesättigten Phosphoniumsalzen mit wenigstens zwei olefinischen Doppelbindungen, die als Anion X⁻ ein Hydrogensulfat besitzen, insbesondere bei (2E,4E)-C15-Triarylphosphoniumhydrogensulfaten und im Besonderen bei [(2E,4E)-3-methyl-5-(2,6,6-trimethylcyclohexen-1-yl)penta-2,4-dienyl]-triphenyl-phosphoniumhydrogensulfat. Auch sie ist kostengünstig und einfach in der Durchführung und führt zu sehr reinem [(2Z,4E)-3-methyl-5-(2,6,6-trimethylcyclohexen-1-yl)penta-2,4-dienyl]-triphenyl-phosphoniumhydrogensulfat.

"Alkohole" bzw. "verzweigte Alkohole" im Sinne der vorab beschriebenen Verfahrensweiterführung sind die weiter oben bereits genannten Alkohole bzw. verzweigten Alkohole.

"Austauschen" soll nach der Erfindung heißen, das eingesetzte Lösungsmittel oder Lösungsmittelgemisch vollständig durch ein anderes Lösungsmittel oder Lösungsmittelgemisch zu ersetzen.

Die erfindungsgemäß einzusetzende Säure ist ausgewählt aus allen Säuren, mit denen sich ein pH-Wert von 0 bis 2 einstellen lässt. Besonders bevorzugte Vertreter sind ausgewählt aus der Gruppe bestehend aus Salzsäure, Salpetersäure, Schwefelsäure, Perchlorsäure, Bromwasserstoffsäure, Jodwasserstoffsäue, Flusssäure, Phosphorsäure, Chlorsäure, Trifluoressigsäure, Ameisensäure, Sulfonsäuren.

Bei Raumtemperatur flüssige Kohlenwasserstoffe im Sinne der Erfindung sind die weiter oben bereits genannten und insbesondere jene, die ausgewählt sind aus der Gruppe bestehend aus Pentan, Cyclopentan, Methylcyclopentan, Hexan, Cyclohexan, Heptan, Methylcyclohexan, n-Octan, 2-Methylheptan, 3-Methylheptan, 4-Methylheptan, 2,2-Dimethylhexan, 2,3-Dimethylhexan, 2,4-Dimethylhexan, 2,5-Dimethylhexan, 3,3-Dimethylhexan, 3,4-Dimethylhexan, 3-Ethylhexan, 2,2,3-Trimethylpentan, 2,2,4-Trimethylpentan (iso-Octan), 2,3,3-Trimethylpentan, 2,3,4-Trimethylpentan, 3-Ethyl-2-methylpentan, 3-Ethyl-3-methylpentan, 2,2,3,3-Tetramethylbutan.

Unter Inkubieren ist zu verstehen, das Reaktionsgemisch bei der vorgegebenen Temperatur für eine Zeitspanne von 2 bis 18 Stunden ruhen zu lassen, vorzugsweise für eine Zeitspanne von 4 bis 15 Stunden und besonders bevorzugt für eine Zeitspanne von 8 bis 12 Stunden.

In einer variablen Vorgehensweise zur Aufarbeitung des Reaktionsgemisches nach der Isomerisierung trennt man nicht reagiertes Ausgangsmaterial der allgemeinen Formel 2 hieraus nicht ab, sondern konzentriert sich direkt auf das Produkt des erfinderischen Verfahrens, nämlich das (2Z,4E)-C15-Triarylphosphoniumsalz insbesondere das (2Z,4E)-C15-Triarylphosphoniumsalz der allgemeinen Formel 1.

Diese Vorgehensweise erweitert die Möglichkeiten der Aufarbeitung des Reaktionsgemisches. Sie führt zu dem weitergeführten erfinderischen Verfahren zur Herstellung von [(2Z,4E)-3-methyl-5-(2,6,6-trimethylcyclohexen-1-yl)penta-2,4-dienyl]-triphenyl-phosphoniumsalz der allgemeinen Formel 1 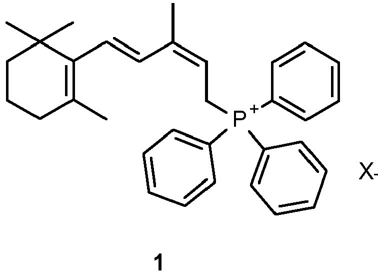 durch Isomerisierung von [(2E,4E)-3-methyl-5-(2,6,6-trimethylcyclohexen-1-yl)penta-2,4-dienyl]-triphenyl-phosphoniumsalz der allgemeinen Formel 2, 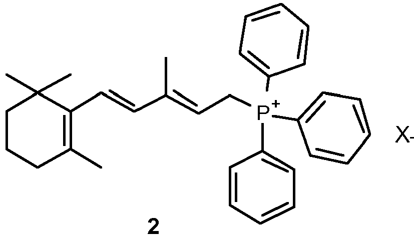 wobei die Molmasse des Anions X- höchstens 200 g/mol beträgt
und anschließende Kristallisation der Verbindung der allgemeinen Formel 1 durch Versetzen mit Impfkristallen dieser Verbindung 1.

Ein weiterer Gegenstand der Erfindung ist die Verwendung der verfahrensgemäß erhaltenen Verbindung 1 zur Herstellung von 9Z-Retinoiden sowie zur Herstellung von Carotinoiden mit mindestens einer cis-Doppelbindung.

9Z-Retinoide im Sinne dieser Offenbarung umfassen 9Z-Retinol, 9Z-Retinal, 9Z-Retinsäure, 9Z-Retinsäure Alkalimetallsalze, 9Z-Retinsäure Erdalkalimetallsalze, 9Z-Retinsäureester, wie 9Z-Retinsäure Fluorenylmethylester und 9Z-Retinsäure Benzylester, ferner niedere Alkylester der 9Z-Retinsäure, wobei "niedere Alkyl" steht für Methyl, Ethyl, n-Propyl, Isopropyl, n-Butyl, Isobutyl und tert.-Butyl. Die cis- oder Z-Doppelbindung an Position 9 in diesen Verbindungen betrifft jene Doppelbindung, die sich im erfindungsgemäßen [(2Z,4E)-3-methyl-5-(2,6,6-trimethylcyclohexen-1-yl)penta-2,4-dienyl]-triphenyl-phosphoniumsalz an Position 2 befindet und sich bis zu Position 3 erstreckt.

Carotinoide im Rahmen dieser Offenbarung sind eine umfangreiche Klasse an natürlichen Farbstoffen, die eine gelbe bis rötliche, mitunter auch blaue Färbung verursachen und wesentlich aus einem aus Isopreneinheiten gebildeten ungesättigten Kohlenwasserstoff mit einem konjugierten π-Elektronensystem von Doppelbindungen aufgebaut sind, von denen wenigstens eine eine cis- oder Z-Konformation aufweist.

Im Besonderen ist die Verwendung der verfahrensgemäß erhaltenen Verbindungen der allgemeinen Formel 1 zur Herstellung von 9Z-β-Carotin vorgesehen. Ferner ist eine Verwendung besagter Verbindung 1 zur Herstellung von Phytohormonen Gegenstand der Erfindung. Hier besonders bevorzugt ist die Verwendung von Verbindung 1 zur Herstellung von Carlacton.

Ein weiterer wesentlicher Teil der Erfindung ist die Verwendung von Verbindungen der allgemeinen Formel 1 zur Herstellung des auch als pharmazeutisch akzeptable Substanz bezeichneten Pharmawirkstoffs 9Z-Retinsäure. Dieser Pharmawirkstoff hat spezielle Bioverträglichkeits-und Reinheitsanforderungen gemäß dem gegenwärtig aktuellen Europäischen Arzneibuch Ausgabe 7 und gemäß Good Manufacturing Practices GMP zu erfüllen. Weiterhin ist die Verwendung von Verbindungen der allgemeinen Formel 1 zur Herstellung von pharmazeutisch akzeptablen Salzen der 9Z-Retinsäure sowie zur Herstellung von pharmazeutisch akzeptablen hydrolisierbaren Estern der 9Z-Retinsäure Gegenstand dieser Offenbarung. Eine weitere Fortführung umfasst die Verwendung der Verbindung mit der allgemeinen Formel 1 zur Herstellung von Metaboliten der 9Z-Retinsäue als Pharmawirkstoff.

Weiterer Gegenstand der Offenbarung ist die Verwendung von Verbindungen der allgemeinen Formel 1 zur Herstellung von Retinoiden für eine Zubereitung, die ausgewählt ist aus der Gruppe bestehend aus Tabletten, Kapseln, Pillen, Portionstütchen, Salben, Cremes sowie Lotionen.

Ein noch anderer Aspekt der Erfindung umfasst schließlich die Verwendung von Verbindungen der allgemeinen Formel 1 zur Herstellung von Retinoiden für Formulierungen zur topischen oder oralen Anwendung, insbesondere zur Behandlung von Hauterkrankungen, darunter vorzugsweise Handekzeme oder das Karposi Sarkom.

Weitere Merkmale, Einzelheiten und Vorteile der Erfindung ergeben sich aus dem Wortlaut der Ansprüche sowie aus der folgenden Beschreibung von Ausführungsbeispielen.

### Beispiel 1:

### Isomerisierung von [(2E,4E)-3-methyl-5-(2,6,6-trimethylcyclohexen-1-yl)penta-2,4-dienyl]-triphenyl-phosphoniumhydrogensulfat

In einem 4000 ml Rundkolben werden 2535 g (1,67 mol) einer 37,2 Gew.-%igen Lösung von [(2E,4E)-3-methyl-5-(2,6,6-trimethylcyclohexen-1-yl)penta-2,4-dienyl]-triphenyl-phosphonium-hydrogensulfat in Methanol unter Stickstoff vorgelegt, durch Zugabe von 111,30 g (0,618 mol) einer 30 Gew.-%igem Natriummethanolatlösung in Methanol alkalischer gemacht und das ausgefallene Natriumsulfat abfiltriert. Das Filtrat wird mit einer exakt festgelegten Verweilzeit von 25 min durch einen auf 145 °C erhitzten Durchflussreaktor gepumpt. Anschließend destilliert man das Lösungsmittel ab, nimmt in Isopropanol auf, säuert mit Schwefelsäure auf einen pH-Wert von 0,3 an und kristallisiert das nicht isomerisierte [(2E,4E)-3-methyl-5-(2,6,6-trimethylcyclohexen-1-yl)penta-2,4-dienyl]-triphenyl-phosphoniumsalz der allgemeinen Formel 2 durch Zugabe von 823 g Heptan und Abkühlen auf -10 °C aus. Nach dem Abfiltrieren der Kristalle erhält man 1648 g einer 11,2 Gew.-%igen Lösung von [(2Z,4E)-3-methyl-5-(2,6,6-trimethylcyclohexen-1-yl)penta-2,4-dienyl]-triphenyl-phosphoniumhydrogensulfat (0,327 mol) in einer Reinheit von 95 % und einer Ausbeute von 20 %.

### Beispiele 2 bis 5:

### Isomerisierung von [(2E,4E)-3-methyl-5-(2,6,6-trimethylcyclohexen-1-yl)penta-2,4-dienyl]-triphenyl-phosphoniumchlorid bei verschiedenen Temperaturen

1 g des vorab genannten Phosphoniumsalzes wird in 10 ml Propylacetat bei 20 °C suspendiert und in einem Mikrowellenreaktor 15 min auf die in Tabelle 1 aufgeführte Temperatur erhitzt. Anschließend wird von der erhaltenen Lösung eine Probe entnommen, diese per HPLC chromatographisch nach fachbekannter Weise aufgetrennt und anhand der für die einzelnen im Chromatogramm erhaltenen Peaks bestimmten Flächeninhalte das Isomerenverhältnis bestimmt.

**Tabelle 1:**

| Beispiel | T (°C) | Verbindung der allgemeinen Formel 2 mit Chlorid als Anion | Verbindung der allgemeinen Formel 1 mit Chlorid als Anion | Weiteres nicht identifiziertes Isomer A | Weiteres nicht identifiziertes Isomer B |
|---|---|---|---|---|---|
| 2 | 140 | 58,04 | 23,54 | 3,86 | 2,84 |
| 3 | 150 | 53,85 | 24,88 | 5,63 | 3,83 |
| 4 | 160 | 50,37 | 23,02 | 6,65 | 4,74 |
| 5 | 170 | 48,70 | 23,80 | 10,21 | 3,49 |

Man erkennt, dass die besten Ausbeuten bei einer Temperatur von 150 °C erzielt werden.

### Beispiele 6 bis 8:

### Isomerisierung von [(2E,4E)-3-methyl-5-(2,6,6-trimethylcyclohexen-1-yl)penta-2,4-dienyl]-triphenyl-phosphoniumchlorid bei 160 °C und verschiedenen exakt festgelegten Verweilzeiten

1 g des vorab genannten Phosphoniumsalzes wird in 10 ml Propylacetat bei 20 °C suspendiert und in einem Mikrowellenreaktor bei unterschiedlichen exakt festgelegten und in Tabelle 2 angegebenen Verweilzeiten auf 160 °C erhitzt. Anschließend wird von der erhaltenen Lösung eine Probe entnommen, diese per HPLC chromatographisch in einer dem Fachmann geläufigen Weise aufgetrennt und anhand der für die einzelnen im Chromatogramm erhaltenen Peaks bestimmten Flächeninhalte das Isomerenverhältnis bestimmt.

**Tabelle 2**

| Beispiel | t (min) | Verbindung der allgemeinen Formel 2 mit Chlorid als Anion | Verbindung der allgemeinen Formel 1 mit Chlorid als Anion | Weiteres nicht identifiziertes Isomer A | Weiteres nicht identifiziertes Isomer B |
|---|---|---|---|---|---|
| 6 | 5 | 58,78 | 22,74 | 4,09 | 3,04 |
| 7 | 10 | 53,18 | 23,12 | 5,9 | 4,14 |
| 8 | 15 | 50,37 | 23,02 | 6,65 | 4,74 |

Man erkennt, dass die besten Ausbeuten bei einer exakt festgelegten Verweilzeit von 10 min erzielt werden.

### Beispiele 9 bis 10:

### Isomerisierung von [(2E,4E)-3-methyl-5-(2,6,6-trimethylcyclohexen-1-yl)penta-2,4-dienyl]-triphenyl-phosphoniumtosylat bei 160 und 180 °C

1 g des vorab genannten Phosphoniumsalzes wird in 10 ml Ethylacetat bei 20 °C suspendiert und in einem Mikrowellenreaktor 10 min lang auf die in Tabelle 3 aufgeführte Temperatur erhitzt. Anschließend wird von der erhaltenen Lösung per HPLC in der in den vorhergehenden Beispielen beschriebenen Weise das Isomerenverhältnis bestimmt.

**Tabelle 3**

| Beispiel | T (°C) | Verbindung der allgemeinen Formel 2 mit Tosylat als Anion | Verbindung der allgemeinen Formel 1 mit Tosylatals Anion | Weiteres nicht identifiziertes Isomer A | Weiteres nicht identifiziertes Isomer B |
|---|---|---|---|---|---|
| 9 | 160 | 74,84 | 20,43 | 0,91 | 0,58 |
| 10 | 180 | 57,34 | 30,93 | 4,86 | 3,07 |

Man erkennt, dass Verbindungen der allgemeinen Formel 1 mit Tosylat als Anion bei höheren Temperaturen als die entsprechenden Chloride umzusetzen sind, bei hohen Temperaturen jedoch auch im Vergleich zu den entsprechenden Chloriden höhere Ausbeuten liefern.

Allen für das erfinderische isomerisierungsverfahren eingesetzten Verbindungen ist gemein, dass sie sich bei Temperaturen oberhalb 100 °C nicht zersetzen. Sogar bei 180 °C wurde keine Zersetzung beobachtet.

Die Erfindung ist nicht nur auf die in der Beschreibung samt Beispielen und in den Ansprüchen gemachten Ausführungsformen begrenzt, sondern in vielfältiger Weise abwandelbar.

Nach alledem erkennt man, dass die vorliegende Erfindung ein Verfahren betrifft zur Herstellung eines 2Z,4E-konfigurierten, olefinisch ungesättigten Phosphoniumsalzes mit wenigstens zwei olefinischen Doppelbindungen, aus einem olefinisch ungesättigten Phosphoniumsalz mit wenigstens zwei olefinischen Doppelbindungen, die gegenüber der Zielverbindung beide eine allE- oder all trans Konformation besitzen. Darüber hinaus ist Erfindungsgegenstand, das erfindungsgemäße Verfahren zur Herstellung von 9Z-Retinoiden sowie zur Herstellung von Carotinoiden mit mindestens einer cis-Doppelbindung.

## Patentansprüche

1. Verfahren zur Herstellung von [(2Z,4E)-3-methyl-5-(2,6,6-trimethylcyclohexen-1-yl)penta-2,4-dienyl]-triphenyl-phosphoniumsalz der allgemeinen Formel (1) 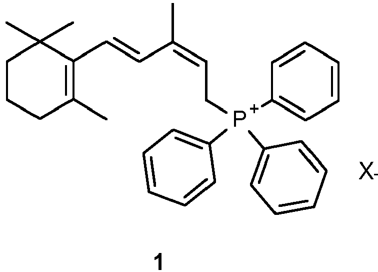 durch Isomerisierung von [(2E,4E)-3-methyl-5-(2,6,6-trimethylcyclohexen-1-yl)penta-2,4-dienyl]-triphenyl-phosphoniumsalz der allgemeinen Formel (2), 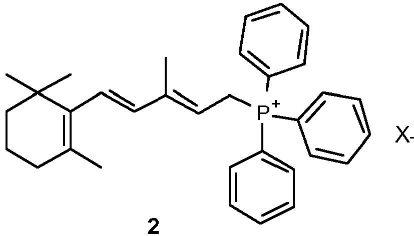 wobei die Molmasse des Anions X⁻ höchstens 200 g/mol beträgt.

2. Verfahren nach Anspruch 1, **dadurch gekennzeichnet, dass** X⁻ ausgewählt ist aus der Gruppe bestehend aus Halogenid, Dihydrogenphosphat, Hydrogenphosphat, Phosphat, Nitrat, Hydrogensulfat, Sulfat, Chlorat, Perchlorat, Tetrafluoroborat, C1 - C4-Alkanoaten, insbesondere Acetat, C1 - C7-Sulfonaten, insbesondere Methansulfonat, Benzolsulfonat und Toluolsulfonat.

3. Verfahren nach Anspruch 1 oder 2, **dadurch gekennzeichnet, dass** die Isomerisierung eine thermische Isomerisierung ist.

4. Verfahren nach Anspruch 3, **dadurch gekennzeichnet, dass** die thermische Isomerisierung in einem Temperaturbereich von 50 bis 200 °C, vorzugsweise von 100 °C bis 180 °C und besonders bevorzugt in einem Bereich von 120 bis 180 °C durchgeführt wird.

5. Verfahren nach einem der Ansprüche 1 bis 4, **dadurch gekennzeichnet, dass** man die Isomerisierung in einem Druckbereich von 1 bis 100 bar, vorzugsweise von 5 bis 80 bar, noch bevorzugter in einem Druckbereich von 8 bis 50 bar und am bevorzugtesten in einem Druckbereich von 10 bis 25 bar durchführt.

6. Verfahren nach einem der Ansprüche 1 bis 5, **dadurch gekennzeichnet, dass** man die Isomerisierung in einem Lösungsmittel oder einem Lösungsmittelgemisch durchführt.

7. Verfahren nach Anspruch 6, **dadurch gekennzeichnet, dass** man das Lösungsmittel oder das Lösungsmittelgemisch aus der Gruppe bestehend aus Toluol, Xylol, Dioxan, THF, DMF, DMSO, C1 - C6-Alkohol, C3 - C7-Keton, Ethylacetat, Propylacetat, Butylacetat, Ethylpropionat oder aus einer Mischung wenigstens zweier dieser Verbindungen auswählt.

8. Verfahren nach Anspruch 6 oder 7, **dadurch gekennzeichnet, dass** man als Lösungsmittel Methanol verwendet.

9. Verfahren nach einem der Ansprüche 1 bis 8, **dadurch gekennzeichnet, dass** man die Isomerisierung in Gegenwart einer Base durchführt.

10. Verfahren nach Anspruch 9, **dadurch gekennzeichnet, dass** die Base in einer solchen Menge zugegeben wird, dass die daraus gebildeten Anionen 0,1 bis 1 Moläquivalente bezogen auf Verbindung (2) betragen, vorzugsweise 0,2 bis 0,7 Moläquivalente und besonders bevorzugt 0,25 bis 0,5 Moläquivalente.

11. Verfahren nach einem der Ansprüche 1 bis 10, **dadurch gekennzeichnet, dass** man die Isomerisierung in einem Reaktor mit einem festgelegten Temperaturprofil, insbesondere mit einem isothermen Temperaturprofil, und einer exakt festgelegten Verweilzeit durchführt.

12. Verfahren nach Anspruch 11, **dadurch gekennzeichnet, dass** man als Reaktor einen Mikrowellenreaktor oder einen Durchflussrohrreaktor verwendet.

13. Verfahren nach einem der Ansprüche 1 bis 12, **dadurch gekennzeichnet, dass** nach der Isomerisierung gegebenenfalls nicht reagiertes Ausgangsmaterial der allgemeinen Formel (2) abgetrennt und rückgeführt wird.

14. Verfahren nach einem der Ansprüche 9 bis 13, **dadurch gekennzeichnet, dass** man nach der Isomerisierung in Gegenwart von Base
- das vorhandene Lösungsmittel oder das Lösungsmittelgemisch gegen einen Alkohol, vorzugsweise gegen einen verzweigten Alkohol und besonders bevorzugt gegen Isopropanol austauscht,
- mit einer Säure auf einen pH-Wert von 0 bis 2 ansäuert,
- einen bei Raumtemperatur flüssigen Kohlenwasserstoff hinzugibt,
- auf eine Temperatur im Bereich von -30 °C und 20 °C, vorzugsweise auf eine Temperatur im Bereich von -30 °C und 10 °C abkühlt,
- bei dieser Temperatur inkubiert
- und den erhaltenen Feststoff abtrennt.

15. Verfahren nach einem der Ansprüche 1 bis 14, , **dadurch gekennzeichnet, dass** die Verbindung (1) zur Herstellung von 9Z-Retinoiden sowie zur Herstellung von Carotinoiden mit mindestens einer cis-Doppelbindung verwendet wird.

## Claims

1. A process for preparing [(2Z,4E)-3-methyl-5-(2,6,6-trimethylcyclohexen-1-yl)penta-2,4-dienyl]triphenylphosphonium salt of the general formula (1) 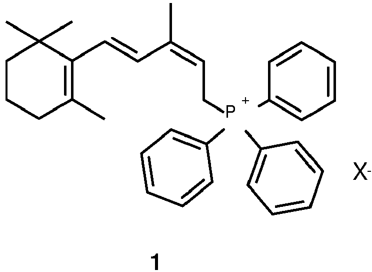 by isomerizing [(2E,4E)-3-methyl-5-(2,6,6-trimethylcyclohexen-1-yl)penta-2,4-dienyl]-triphenylphosphonium salt of the general formula (2), 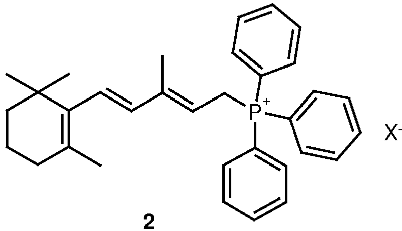 where the molar mass of the anion X⁻ is not more than 200 g/mol.

2. The process according to claim 1, wherein X⁻ is selected from the group consisting of halide, dihydrogenphosphate, nitrate, hydrogensulfate, sulfate, chlorate, perchlorate, tetrafluoroborate, C1 - C4-alkanoates, especially acetate, C1 - C7-sulfonates, especially methanesulfonate, benzenesulfonate and toluenesulfonate.

3. The process according to claim 1 or 2, wherein the isomerization is a thermal isomerization.

4. The process according to claim 3, wherein the thermal isomerization is performed within a temperature range from 50 to 200°C, preferably from 100°C to 180°C and more preferably within a range from 120 to 180°C.

5. The process according to any of claims 1 to 4, wherein the isomerization is performed within a pressure range from 1 to 100 bar, preferably from 5 to 80 bar, even more preferably within a pressure range from 8 to 50 bar and most preferably within a pressure range from 10 to 25 bar.

6. The process according to any of claims 1 to 5, wherein the isomerization is performed in a solvent or a solvent mixture.

7. The process according to claim 6, wherein the solvent or solvent mixture is selected from the group consisting of toluene, xylene, dioxane, THF, DMF, DMSO, C1-C6-alcohol, C3-C7-ketone, ethyl acetate, propyl acetate, butyl acetate, ethyl propionate, or from a mixture of at least two of these compounds.

8. The process according to claim 6 or 7, wherein the solvent used is methanol.

9. The process according to any of claims 1 to 8, wherein the isomerization is performed in the presence of a base.

10. The process according to claim 9, wherein the base is added in such an amount that the anions formed therefrom are 0.1 to 1 molar equivalent based on compound (2), preferably 0.2 to 0.7 molar equivalent and more preferably 0.25 to 0.5 molar equivalent.

11. The process according to any of claims 1 to 10, wherein the isomerization is performed in a reactor with a fixed temperature profile, especially with an isothermal temperature profile, and an exactly fixed residence time.

12. The process according to claim 11, wherein the reactor used is a microwave reactor or a flow tube reactor.

13. The process according to any of claims 1 to 12, wherein the isomerization is followed by removal and recycling of any unreacted starting material of the general formula (2).

14. The process according to any of claims 9 to 13, wherein the isomerization in the presence of base is followed by
- exchanging the solvent present or the solvent mixture for an alcohol, preferably for a branched alcohol and more preferably for isopropanol,
- acidifying with an acid to a pH of 0 to 2,
- adding a hydrocarbon liquid at room temperature,
- cooling to a temperature in the range from -30°C and 20°C, preferably to a temperature in the range from -30°C and 10°C,
- incubating at this temperature
- and removing the solids obtained.

15. The use of the compound (1) prepared by a process according to any of claims 1 to 14 for preparation of 9Z-retinoids and for preparation of carotenoids having at least one *cis* double bond.

## Revendications

1. Procédé de fabrication d'un sel de [(2Z,4E)-3-méthyl-5-(2,6,6-triméthylcyclohexén-1-yl)penta-2,4-diényl]-triphényl-phosphonium de formule générale (1) 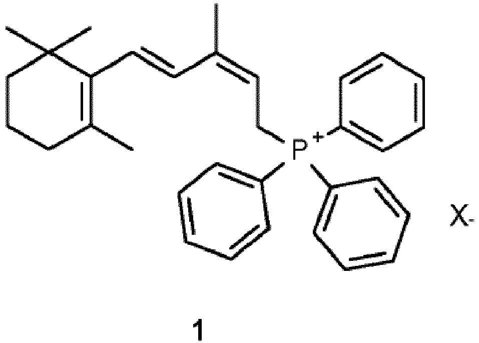 par isomérisation d'un sel de [(2E,4E)-3-méthyl-5-(2,6,6-triméthylcyclohexén-1-yl)penta-2,4-diényl]-triphényl-phosphonium de formule générale (2) 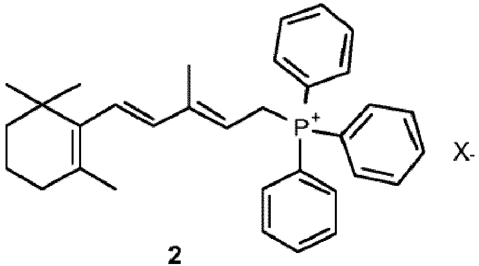 dans lesquelles la masse molaire de l'anion X⁻ est d'au plus 200 g/mol.

2. Procédé selon la revendication 1, **caractérisé en ce que** X⁻ est choisi dans le groupe constitué par halogénure, dihydrogénophosphate, hydrogénophosphate, phosphate, nitrat, hydrogénosulfate, sulfate, chlorate, perchlorate, tétrafluoroborate, alcanoates en C1-C4, notamment acétate, sulfonates en C1-C7, notamment méthanesulfonate, benzènesulfonate et toluènesulfonate.

3. Procédé selon la revendication 1 ou 2, **caractérisé en ce que** l'isomérisation est une isomérisation thermique.

4. Procédé selon la revendication 3, **caractérisé en ce que** l'isomérisation thermique est réalisée dans une plage de température allant de 50 à 200 °C, de préférence de 100 °C à 180 °C et de manière particulièrement préférée dans une plage allant de 120 à 180 °C.

5. Procédé selon l'une quelconque des revendications 1 à 4, **caractérisé en ce que** l'isomérisation est réalisée dans une plage de pression allant de 1 à 100 bar, de préférence de 5 à 80 bar, de manière encore davantage préférée dans une plage de pression allant de 8 à 50 bar et de manière préférée entre toutes dans une plage de pression allant de 10 à 25 bar.

6. Procédé selon l'une quelconque des revendications 1 à 5, **caractérisé en ce que** l'isomérisation est réalisée dans un solvant ou un mélange de solvants.

7. Procédé selon la revendication 6, **caractérisé en ce que** le solvant ou le mélange de solvants est choisi dans le groupe constitué par le toluène, le xylène, le dioxane, le THF, le DMF, le DMSO, un alcool en C1-C6, une cétone en C3-C7, l'acétate d'éthyle, l'acétate de propyle, l'acétate de butyle, le propionate d'éthyle, ou un mélange d'au moins deux de ces composés.

8. Procédé selon la revendication 6 ou 7, **caractérisé en ce que** le méthanol est utilisé en tant que solvant.

9. Procédé selon l'une quelconque des revendications 1 à 8, **caractérisé en ce que** l'isomérisation est réalisée en présence d'une base.

10. Procédé selon la revendication 9, **caractérisé en ce que** la base est ajoutée en une quantité telle que les anions formés à partir de celle-ci soient de 0,1 à 1 équivalent molaire par rapport au composé (2), de préférence de 0,2 à 0,7 équivalent molaire et de manière particulièrement préférée de 0,25 à 0,5 équivalent molaire.

11. Procédé selon l'une quelconque des revendications 1 à 10, **caractérisé en ce que** l'isomérisation est réalisée dans un réacteur avec un profil de température fixe, notamment avec un profil de température isotherme, et un temps de séjour fixe exact.

12. Procédé selon la revendication 11, **caractérisé en ce qu'**un réacteur à microondes ou un réacteur tubulaire à écoulement est utilisé en tant que réacteur.

13. Procédé selon l'une quelconque des revendications 1 à 12, **caractérisé en ce qu'**un matériau de départ de formule générale (2) éventuellement non réagi est séparé après l'isomérisation et recyclé.

14. Procédé selon l'une quelconque des revendications 9 à 13, **caractérisé en ce qu'**après l'isomérisation, en présence d'une base,
- le solvant ou mélange de solvants présent est remplacé par un alcool, de préférence par un alcool ramifié et de manière particulièrement préférée par de l'isopropanol,
- une acidification est effectuée à un pH de 0 à 2 avec un acide,
- un hydrocarbure liquide à température ambiante est ajouté,
- un refroidissement à une température dans la plage allant de -30 °C à 20 °C, de préférence à une température dans la plage allant de -30 °C à 10 °C, est effectué,
- une incubation est effectuée à cette température,
- et le solide obtenu est séparé.

15. Procédé selon l'une quelconque des revendications 1 à 14, **caractérisé en ce que** le composé (1) est utilisé pour la fabrication de 9Z-rétinoïdes, ainsi que pour la fabrication de caroténoïdes contenant au moins une double liaison cis.
